(19) Europäisches Patentamt
European Patent Office
Office européen des brevets

(11) Veröffentlichungsnummer : 0 282 443 B1

# (12) EUROPÄISCHE PATENTSCHRIFT

(45) Veröffentlichungstag der Patentschrift : 25.09.91 Patentblatt 91/39

(51) Int. Cl.[5] : C09B 62/507, D06P 3/66

(21) Anmeldenummer : 88810052.6

(22) Anmeldetag : 01.02.88

## (54) Reaktivfarbstoffe, deren Herstellung und Verwendung.

(30) Priorität : 06.02.87 CH 443/87

(43) Veröffentlichungstag der Anmeldung : 14.09.88 Patentblatt 88/37

(45) Bekanntmachung des Hinweises auf die Patenterteilung : 25.09.91 Patentblatt 91/39

(84) Benannte Vertragsstaaten : BE CH DE FR GB IT LI

(56) Entgegenhaltungen :
EP-A- 0 208 655
DE-A- 2 040 620

(73) Patentinhaber : CIBA-GEIGY AG
Klybeckstrasse 141
CH-4002 Basel (CH)

(72) Erfinder : Tzikas, Athanassios, Dr.
Muttenzerstrasse 78
CH-4133 Pratteln (CH)
Erfinder : Meindl, Hubert, Dr.
Kornfeldstrasse 77
CH-4125 Riehen (CH)

EP 0 282 443 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollten ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

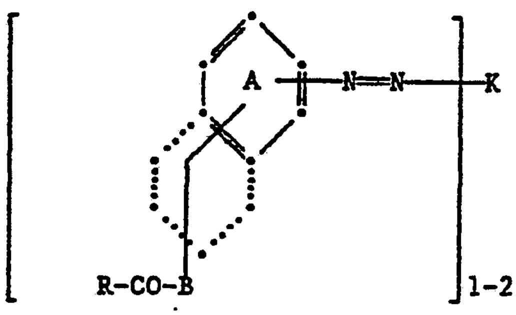

(1) ,

worin B ein Rest $-(CH_2)_n-$ oder $-O-(CH_2)_n-$, wobei, falls B ein Rest $-O-(CH_2)_n-$ ist, B durch das Sauerstoffatom an das Ringsystem A gebunden ist, n = 1 bis 6, R ein Rest der Formel

$$Z-SO_2-CH_2-\overset{\displaystyle Y}{\overset{|}{(alk)}}-\underset{\underset{\displaystyle V}{|}}{N}- \qquad (1a)$$

$$Z-SO_2-(CH_2)_m-O-(CH_2)_p-\underset{\underset{\displaystyle R_1}{|}}{N}- \qquad (1b)$$

$$Z-SO_2-(alk')-NH-(alk')-\underset{\underset{\displaystyle H}{|}}{N}- \qquad (1c)$$

oder 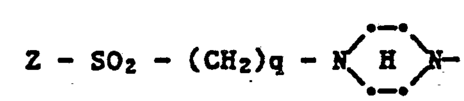 (1d);

Z β-Sulfatoäthyl, β-Thiosulfatoäthyl, β-Phosphatoäthyl, β-Acyloxyäthyl, β-Halogenäthyl oder Vinyl ; alk ein Alkylenrest mit 1 bis 6 C-Atomen oder dessen verzweigte Isomere ; Y Wasserstoff, Chlor, Brom, Fluor, Hydroxy,

Sulfato, Acyloxy mit 1 bis 4 C-Atomen, Cyano, Carboxy, Alkoxycarbonyl mit 1 bis 5 C-Atoren, Carbamoyl, oder ein Rest $-SO_2-Z$, worin Z die oben angegebene Bedeutung hat ; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann ; oder ein Rest

$$Z - SO_2 - CH_2 - \underset{}{\overset{Y}{\overset{|}{(alk)}}} -$$

worin Z, alk und Y die angegebenen Bedeutungen haben ; $R_1$ Wasserstoff oder $C_{1-6}$-Alkyl ; alk' unabhängig voneinander Polymethylenreste mit 2 bis 6 C-Atomen oder deren verzweigte Isomere ; m = 1 bis 6, p = 1 bis 6 und q = 1 bis 6 ; und K der Rest einer Kupplungskomponente der Benzol- oder Naphthalinreihe oder der heterocyclischen Reihe ist ; und der Benzol- bzw. Naphthalinrest A weitersubstituiert sein kann durch Alkylgruppen mit 1 bis 4 Kohlenstoffatomen, Alkoxygruppen mit 1 bis 4 Kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamcyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl und Sulfo.

Das in Formel (1) innerhalb der eckigen Klammer stehende, mit A bezeichnete Ringsystem bedeutet einen Benzol- oder Naphthalinkern.

Der Rest B enthält 1 bis 6, vorzugsweise 1 bis 4 Kohlenstoffatome ; Beispiele für B sind : Methylen, Aethylen, Propylen, Butylen, Methylenoxy, Aethylenoxy, Propylenoxy und Butylenoxy.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent Y ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert.-Butyl sein. Derivate der Carboxy- oder Sulfogruppe sind z.B. Carbamoyl, N-Methyl-, N-Aethyl-, N,N-Dimethyl-und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec.-Butyl, tert.-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Der Rest K kann selbst wiederum Azogruppen enthalten, er kann also der Rest einer Azoverbindung, insbesondere einer Monoazoverbindung, sein. Sofern K der Rest einer Kupplungskomponente der Benzol- oder Naphthalinreihe ist, stellt K somit vorzugsweise einen Benzol-, Naphthalin-, Azobenzol-, Naphthylazobenzol-, Azonaphthalin- oder Phenylazonaphthalin-Rest dar, der, wie unten angegeben, weitersubstituiert sein kann. Sofern K der Rest einer Kupplungskomponente der heterocyclischen Reihe ist, kommt ein Pyrazolon- oder Pyridonrest oder der Rest einer der weiter unten genannten heterocyclischen Kupplungskomponenten in Betracht. Auch in diesem Fall kann der Rest K weitere Azogruppen enthalten, z.B. wenn K als Phenylazopyrazolonrest vorliegt.

Der Rest K in Formel (1) kann an seinem Grundgerüst die in der Azochemie üblichen Substituenten gebunden enthalten.

Als Beispiele für weitere Substituenten im Rest K seien genannt : Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Ixopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Vitro, Cyano, Halogen, wie Pluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder

Sulfo. Vorzugsweise enthält der Rest K eine oder mehrere Sulfonsäuregruppen. Weitere Substituenten sind vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Ferner sind in Betracht zu ziehen, Reaktivfarbstoffe der Formel (1), worin der Rest K noch einen weiteren Reaktivrest einschliesst. Somit sind auch trireaktive Farbstoffe umfasst. Die zusätzlichen, in K eingeschlossenen Reaktivreste können über Aminogruppen, oder in anderer Weise z.B. durch eine direkte Bindung an K gebunden sein. Die obigen Erläuterungen gelten sinngemäss auch für Disazofarbstoffe.

Als Substituenten am Benzol- bzw. Naphthalinrest A kommen die gleichen in Betracht, die weiter oben bei der Erläuterung des Restes K genannt sind.

Der in eckige Klammern eingeschlossene Teil von Formel (1) kann ein- oder zweimal im Molekül vorhanden sein. Falls ein Farbstoff der Formel (1) zwei derartige Formelteile enthält, können diese gleich oder verschieden sein ; vorzugsweise sind aie gleich. Die eckige Klammer umfasst u.a. den Rest R, der selbst wiederum einen Reaktivrest aufweist, und zwar die Gruppierung Z-$SO_2$— in den Formeln (1a) bis (1d). Der Reaktivrest enthält eine faserreaktive Abgangsgruppe, z.B. wenn Z β-Chloräthyl ist, oder kann nach Art von faserreaktiven Abgangsgruppen wirksam werden, z.B. wenn Z Vinyl ist (Grundlegendes über Reaktivfarbstoffe siehe Venkataraman, K. : The Chemistry of Synthetic Dyes. New York : Academic Press 1972 ; Vol. VI, Reactive Dyes).

Als Reaktivfarbstoffe der Formel (1) sind Mono- und Disazofarbstoffe bevorzugt.

Bevorzugt sind insbesondere :

Reaktivfarbstoffe der Formel

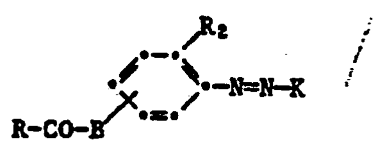

(2),

worin $R_2$ Wasserstoff, $C_{1-4}$-Alkyl, $C_{1-4}$-Alkoxy, Halogen, Hydroxy, Carboxy oder Sulfo ist ; und B, R und K die unter Formel (1) angegebenen Bedeutungen haben ;

Reaktivfarbstoffe der Formel

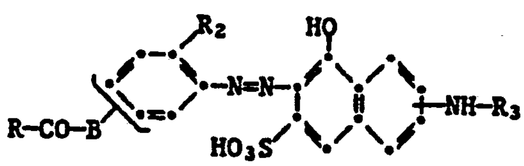

(3),

worin $R_3$ $C_{1-4}$-Alkanoyl oder Benzoyl ist, und B, R und $R_2$ die unter Formel (2) angegebenen Bedeutungen haben ;

Reaktivfarbstoffe der Formel (3), worin $R_3$ Acetyl ist ;

Reaktivfarbstoffe der Formel

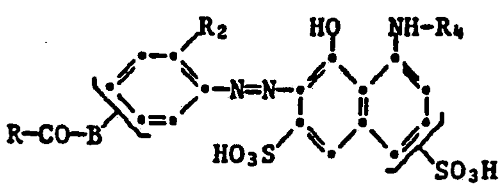

(4),

worin $R_4$ $C_{1-4}$-Alkanoyl oder Benzoyl ist, und B, R und $R_2$ die unter Formel (2) angegebenen Bedeutungen haben ;

Reaktivfarbstoffe der Formel (4), worin $R_4$ Benzoyl ist ;

Reaktivfarbstoffe der Formel

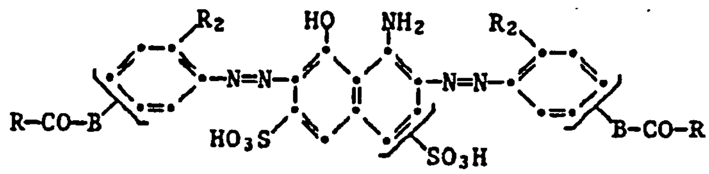

(5),

worin B, R und $R_2$ die unter Formel (2) angegebenen Bedeutungen haben ;

Reaktivfarbstoffe der Formel

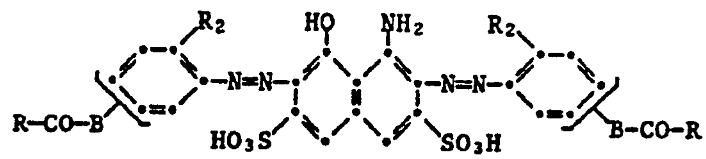

(6),

worin B, R und $R_2$ die unter Formel (2) angegebenen Bedeutungen haben ;

Reaktivfarbstoffe der Formel

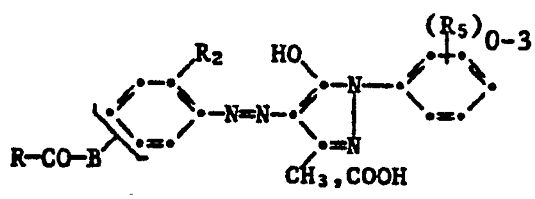

(7),

worin $R_5$ für 0 bis 3 Substituenten aus der Gruppe Chlor, Methyl, Methoxy, Carboxy oder Sulfo unabhängig voneinander, steht, und B, R und $R_2$ die unter Formel (2) angegebenen Bedeutungen haben ;

Reaktivfarbstoffe der Formel

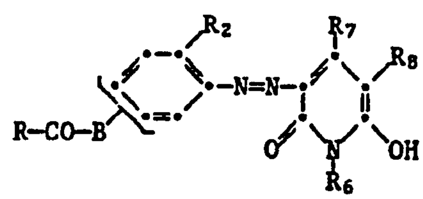

(8),

worin $R_6$ und $R_7$ unabhängig voneinander Wasserstoff, $C_{1-4}$-Alkyl oder Phenyl, und $R_8$ Wasserstoff, Cyano, Carbamoyl oder Sulfomethyl ist, und B, R und $R_2$ die unter Formel (2) angegebenen Bedeutungen haben ;

Schwermetallkomplexe von Reaktivfarbstoffen der Formeln (1) bis (8) ; als komplexbildende Schwermetalle kommen vor allem Kupfer, Nickel, Kobalt oder Chrom in Betracht.

Bevorzugt sind vor allem Verbindungen der Formeln (1) bis (8), worin Z die β-Sulfatoäthyl-, β-Chloräthyl- oder Vinylgruppe ist.

Ein Verfahren zur Herstellung von Reaktivfarbstoffen der Formel (1) ist dadurch gekennzeichnet, dass man Diazokomponenten der Formel

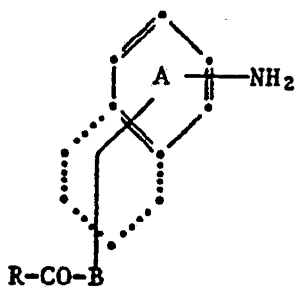

(9) ,

oder ihre Vorprodukte, mit Kupplungskomponenten der Formel

H—K (10)

durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Das molare Verhältnis der Ausgangsstoffe muss der Zusammensetzung des Endprodukts entsprechend gewählt werden, je nachdem ob in K eine oder zwei Kupplungsstellen vorhanden sind.

Gegebenenfalls verwendete man statt einer Kupplungskomponente der Formel (10) ein Vorprodukt und stellt den Endfarbstoff durch eine weitere Kupplung bzw. weitere Kupplungen oder sonstige Umwandlungsreaktionen mit dem Zwischenprodukt fertig.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin Z ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe übergeführt wird ; oder man verwendet einen analogen Farbstoff, worin Z die Gruppe $H_2C=CH-$ ist, und lagert an das Zwischenprodukt Thioschwefelsäure an, wobei ein Rest $HO_3SS-CH_2CH_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffspaltenden Mitteln, wie Natriumhydroxid, behandeln, wobei die Sulfatoäthylsulfonylreste in Vinylsulfonylreste übergehen.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy- oder Carboxygruppen, enthalten, mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten der Formel (9)

Sie können hergestellt werden, indem man entsprechende Nitrophenyl- oder Nitrophenoxyalkansäurechloride oder analoge Naphthalinverbindungen mit Aminen der Formel

H—R (11),

welche den Resten der Formeln (1a) bis (1d) entsprechen, kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer anderen, in der DE-OS 2040620 beschriebenen Methode kann man das Säurechlorid mit einem ungesättigten aliphatischen Amin umsetzen, und an die Dopplebindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung $—SO_2\text{-}Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $—SO_2\text{-}Z$ z.B. die Gruppierung $—SO_2\text{-}CH_2\text{-}CH_2\text{-}O\text{-}SO_3H$, $—SO_2\text{-}CH_2\text{-}CH_2\text{-}O\text{-}PO_3H_2$, $—SO_2\text{-}CH_2\text{-}CH_2\text{-}$Halogen, $—SO_2\text{-}CH_2\text{-}CH_2\text{-}O\text{-}CO\text{-}CH_3$ oder $—SO_2\text{-}CH_2\text{-}CH_2\text{-}O\text{-}CO\text{-}C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxy oder Natriumcarbonat, in entsprechendde Verbindungen übergeführt werden, in denen die Gruppierung $—SO_2\text{-}Z$ die Gruppierung $—SO_2\text{-}CH{=}CH_2$ bedeutet. Die so erhaltenen Produkte können wiederum durch Umsetzung (Addition) mit Salzen der Thioschwefelsäure, wie Natriumthiosulfat, in Verbindungen übergeführt weden, in denen die Gruppierung $—SO_2\text{-}Z$ die Gruppierung $—SO_2\text{-}CH_2\text{-}CH_2\text{-}S\text{-}SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt als Diazokomponenten sind Verbindungen der Formel

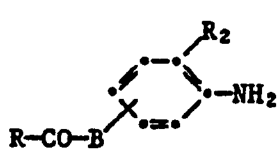

(12),

worin R ein Rest der Formel

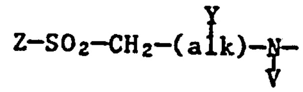 (1a)

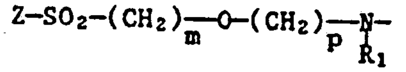 (1b)

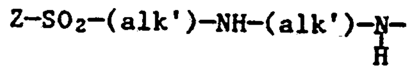 (1c)

oder 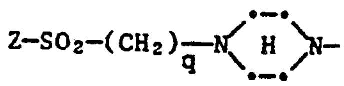 (1d)

ist ; B, Z, alk, Y, V, $R_1$, alk', m, p und q die unter Formel (1) angegebenen Bedeutungen haben ; und $R_2$ Wasserstoff, $C_1$-$C_4$-Alkyl, $C_1$-$C_4$-Alkoxy, Halogen, Hydroxy, Carboxy oder Sulfo ist. In den Verbindungen der Formel (12) ist vorzugsweise $R_2$ Methyl, Methoxy, Chlor, Hydroxy, Carboxy, Sulfo oder vor allem Wasserstoff ; B Methylen, Methylenoxy oder Propylenoxy ; und R einer der oben genannten Reste der Formeln (1a) bis (1d).

Das bevorzugte Verfahren zur Herstellung der Verbindungen der Formel (12) ist dadurch gekennzeichnet, dass man eine Verbindung der Formel

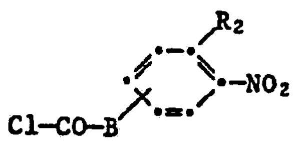 (13),

mit einem Amin der Formel

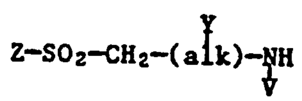 (14a)

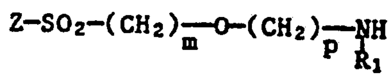 (14b)

$Z{-}SO_2{-}(alk'){-}NH{-}(alk'){-}NH_2$ (14c)

oder 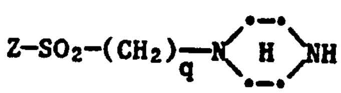 (14d)

kondensiert, und die Nitrogruppe zur Aminogruppe reduziert.

Nach einer Abänderung des oben beschriebenen Verfahrens können Verbindungen der Formel (12) auch in der Weise hergestellt werden, dass man eine Verbindung der Formel (13) mit einem Amin der Formel

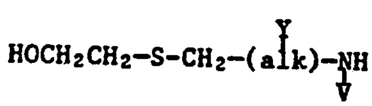 (15a)

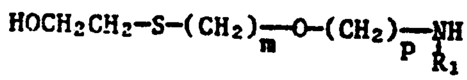 (15b)

$HOCH_2CH_2{-}S{-}(alk'){-}NH{-}(alk'){-}NH_2$ (15c)

oder 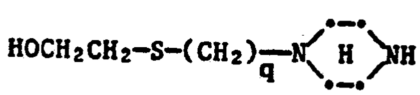 (15d)

kondensiert, das Kondensationsprodukt mit elementarem Chlor zu der entsprechenden β-Chloräthylsulfonyl-Verbindung oxydiert und die Nitrogruppe zur Aminogruppe reduziert.

Ferner ist noch eine andere Verfahrensvariante anwendbar, wonach man zuerst eine Verbindung der Formel (13) mit einem der Amine der Formeln (15a) bis (15d) kondensiert, das erhaltene Produkt mit einem Peroxid zum Sulfon oxydiert, dann die Nitrogruppe zur Aminogruppe reduziert, die erhaltene Aminoverbindung diazotiert und auf eine Kupplungskomponente der Formel (10) kuppelt, und zuletzt die Hydroxygruppe in dem Rest von einem der Amine der Formeln (15a) bis (15d) sulfatiert.

Die Kondensation der Verbindung der Formel (13) mit den Aminen der Formeln (15a) bis (15d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (14a) bis (15d) können analog dem Verfahren des Beispiels 1 der DE-OS 2614550 hergestellt werden.

Wenn ein Reaktivfarbstoff der Formel (1) zwei Diazokomponenten enthält, wie dies bei einem Disazofarbstoff des Typs

$$D_1-N=N-K-N=N-D_2 \quad (16)$$

der Fall ist, worin $D_1$ und $D_2$ Reste von Diazokomponenten sind, und K der Rest einer zweifach kuppelbaren Kupplungskomponente ist, z.B. der H-, K- oder S-Säure, kann einer der beiden Reste $D_1$ oder $D_2$ von dem in der eckigen Klammer in Formel (1) dargestellten verschieden sein. Er kann z.B. der Rest einer gewöhnlichen Diazokomponente sein, welche keinen faserreaktiven Rest enthält, z.B. Anilin ; er kann aber auch der Rest einer Diazokomponente sein, die einen Reaktivrest enthält, der nicht dem Formelglied R-CO-B— entspricht, z.B. 1-Amino-4-(β-sulfatoäthylsulfonyl)-benzol. Ferner kann als zweite Diazokomponente ein Diaminobenzol, z.B. 1,3-Diaminobenzol-4-sulfonsäure, verwendet werden, worin eine der beiden Aminogruppen faserreaktiv acyliert ist oder nachträglich acyliert wird, z.B. mit einem Halogentriazin oder Halogenpyrimidin. Die obigen Erläuterungen gelten sinngemäss auch für die Trisazofarbstoffe oder für Disazo- oder Tetrazofarbstoffe, welche aus Monoazo- oder Disazoverbindungen durch "Verdoppelung" über eine Brückenkomponente zustande kommen.

Als weitere Diazokomponenten, die, wie oben beschrieben, zusammen mit jenen der Formel (9) bzw. (12) verwendet werden können, seien nachfolgend die wichtigsten in einer Auswahl genannt.

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-4-methoxybenzol-2-sulfonsäure, 1-Amino-4-äthoxybenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin,-2,5,7-trisulfonsäure, 2-Aminonaphthalin-1,5,7-, -3,6,8- oder -4,6,8-trisulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1-Amino-4-β-sulfatoäthylsulfonylbenzol, 1-Amino-4-vinylsulfonylbenzol, 1-Amino-3-vinylsulfonylbenzol, 1-Amino-4-β-sulfatoäthylsulfonylbenzol-2-sulfonsäure, 1-Amino-4-[β-(β′-chloräthylsulfonyl)-äthylaminocarbonyl]benzol-2-sulfonsäure, 1-Amino-4-β-(vinylsulfonyl)äthylaminocarbonylbenzol-2-sulfonsäure, 1-Amino-3-γ-(vinylsulfonyl)butyrylaminobenzol-6-sulfonsäure, 1-Amino-3-vinylsulfonyl-6-methoxybenzol, 1-Amino-3-β-(vinylsulfonyl)äthylaminocarbonyl-6-methoxybenzol und 1-Amino-3-β-(vinylsulfonyl)äthylaminocarbonylbenzol ; ferner Diaminobenzole oder Diaminonaphthaline, wie 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,8-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1-Amino-3-aminomethylbenzol-6-sulfonsäure, 1-Amino-3-aminomethyl-4-methoxybenzol-2-sulfonsäure, 2,6-Diaminonaphthalin-4,8-disulfonsäure, 2-Amino-5-aminomethylnaphthalin-1-sulfonsäure und 2-Amino-5-aminomethylnaphthalin-1,7-disulfonsäure ; statt eines Diamins kann auch eine Aminoacetylaminoverbindung eingesetzt werden, aus welcher nachträglich die Acetylgruppe durch Verseifen wieder abgespalten wird, z.B. 1-Acetylamino-3-aminobenzol-4-sulfonsäure oder 1-Acetylamino-4-aminobenzol-3-sulfonsäure. Als Reaktivkomponenten, die zur Umsetzung mit der zweiten Aminogruppe in einem der genannten Diamine verwendet werden können, kommen vor allem aliphatische und heterocyclische Verbindungen, die ausser einer

reaktiven Gruppe oder einem reaktiven Atom noch eine Acylfunktion enthalten, in Betracht, z.B. α-β-Dibrompropionylchlorid, α-Bromacryloylchlorid, γ-Vinylsulfonylbutyrylchlorid und insbesondere Halogenpyrimidine und Halogentriazine. Verwendet man ein Trihalogentriazin, so kann man vorteilhaft vor oder nach der Acylierung einer Aminogruppe des Diamins ein Halogenatom am Triazinring durch einen nichtreaktiven Substituenten, vorzugsweise eine Aminogruppe, ersetzen. Als für diesen Zweck verwendbare Amine kommen z.B. Ammoniak, Methylamin, Aethylamin, β-Hydroxyäthylamin, N,N-Di-β-hydroxyäthylamin, β-Sulfoäthylamin, Cyclohexylamin, Morpholin, N-Methyl-N-phenylamin, N-Aethyl-N-phenylamin oder Benzylamin, oder auch faserreaktive Amine, wie β-(β'-Chloräthylsulfonyl)äthylamin oder β-(β'-Vinylsulfonyläthoxy)-äthylamin, und insbesondere die weiter oben als Diazokomponenten genannten Verbindungen in Betracht. Wichtige Triazinsubstituenten sind also die Reste von Anilin, o-Toluidin, p-Toluidin, Anisidin, Methanilsäure, Sulfanilsäure, Anthranilsäure, 1-Naphthylamin, 2-Naphthylamin, 2-Aminonaphthalin-1-sulfonsäure (Tobias-Säure), 2-Aminonaphthalin-4,8-disulfonsäure (C-Säure) usw., und insbesondere die Reste von Diazokomponenten, welche faserreaktive Gruppen enthalten, z.B. 1-Amino-4-β-sulfatoäthylsulfonylbenzol oder 1-Amino-3-β-vinylsulfonyläthylaminocarbonylbenzol, sowie auch die Diazokomponenten der Formel (9) bzw. (12) selbst, z.B. 1-Amino-4-β-vinylsulfonyl-äthylaminocarbonylmethyl-benzol und 1-Amino-4-β-vinylsulfonyl-äthylaminocarbonylmethoxy-benzol. Derartige Strukturen sind in den Ausführungsbeispielen näher beschrieben.

Kupplungskomponenten der Formel (10)

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphtalin-6- oder -7-sulfonsäure, 2-Hydroxynaphthalin-3,6- oder -6,8-disulfonsäure, 1-Hydroxynaphthalin-4-sulfonsäure, 1-Hydroxynaphtahlin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6oder -4,6-disulfonsäure, 2-Benzoylamino-5-hydroxynaphthalin-7-sulfonsäure, 2-Amino-5-hydroxynaphthalin-7-sulfonsäure, 2-Methyl-bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfatoäthylamino-4-methoxybenzol,

1-Amino-3-sulfo-benzylamino-benzol, 1-Amino-3-sulfo-benzylamino-4-chlorbenzol, 1-Amino-3-N,N-di-sulfo-benzylaminobenzol.

Ein gegebenenfalls in K eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogentome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest. Als zusätzliche Reaktivreste kommen insbesondere die bereits oben bei der Erläuterung der Diazokomponenten erwähnten substituierten Triazine in Betracht. Diese sind beispielsweise an die Aminogruppe der H-, K-, J- oder γ-Säure, eines 3-Ureido- oder 3-Acetylaminoanilins oder eines 1-(Aminophenyl)-pyrazolons gebunden.

Kupplungskomponenten dieser Art sind ebenfalls in den Ausführungsbeispielen beschrieben.

Ausser den oben beschriebenen Reaktivfarbstoffen der Formeln (2) bis (8) sind also weitere wertvolle Vertreter die Reaktivfarbstoffe der folgenden Formeln zu nennen :

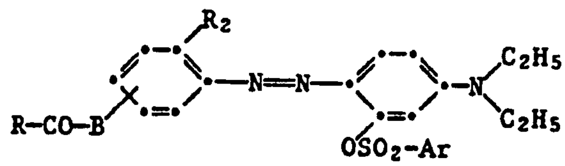

(17),

Ar: Aryl, z.B. Phenyl.

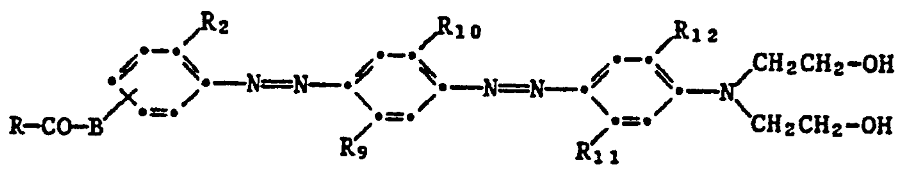

(18),

$R_9$ bis $R_{12}$: H, $C_{1-4}$-Alkyl, $C_{1-4}$-Alkoxy, Halogen, Acetylamino, Ureido.

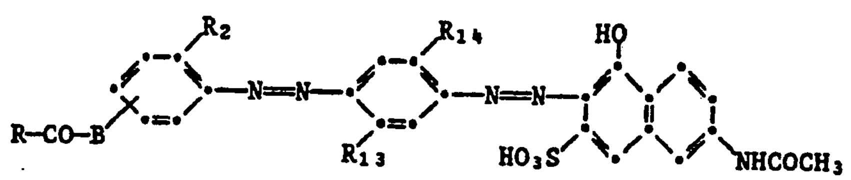

(19),

$R_{13}$, $R_{14}$: H, $C_{1-4}$-Alkyl, $C_{1-4}$-Alkoxy, Halogen, Acetylamino, Ureido.

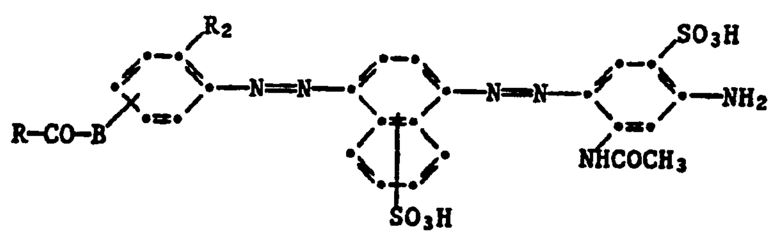

(20),

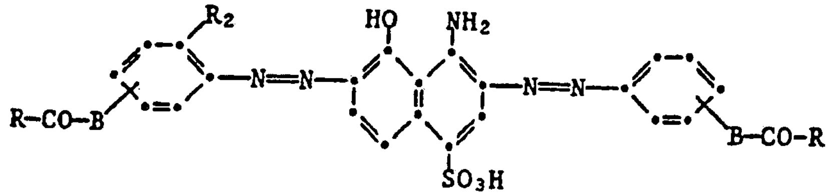

(21),

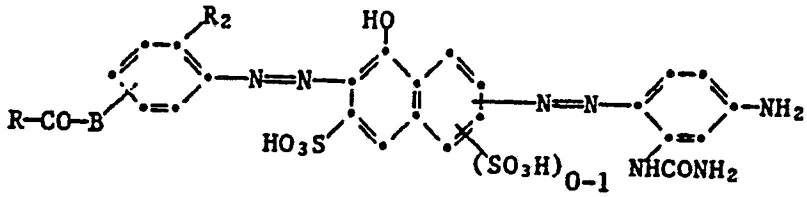

(22),

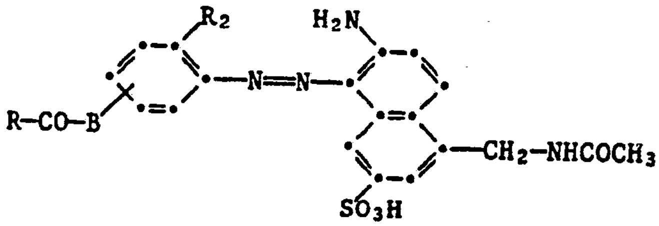

(23),

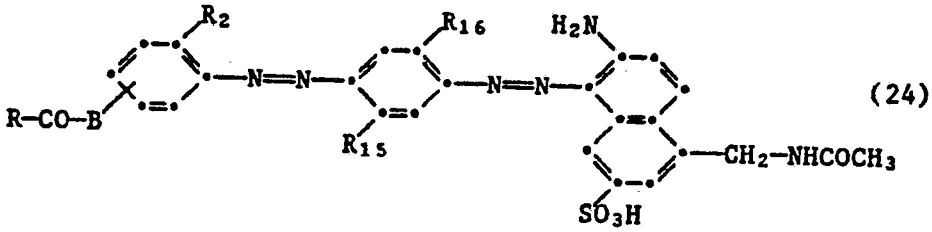

(24),

$R_{15}$, $R_{16}$: H, $C_{1-4}$-Alkyl, $C_{1-4}$-Alkoxy, Halogen, Acetylamino, Ureido.

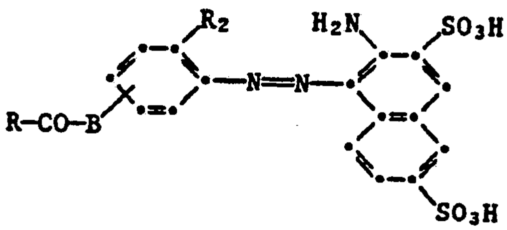

(25),

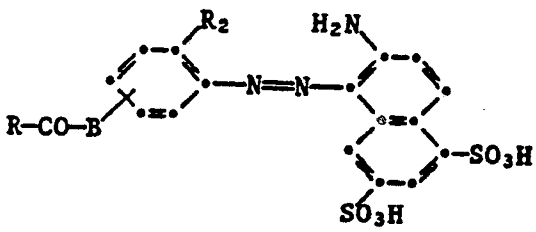

(26),

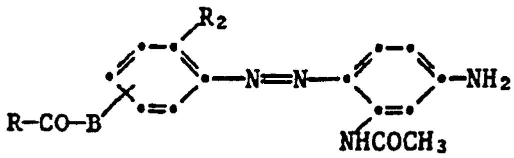 (27),

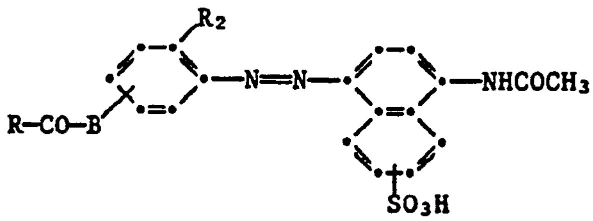 (28),

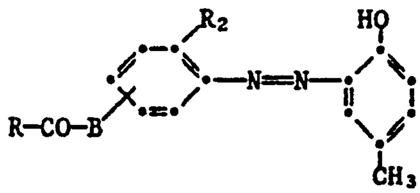 (29),

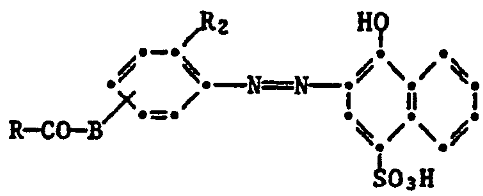 (30),

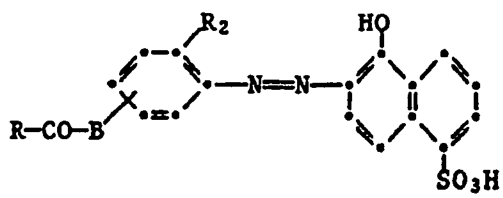 (31),

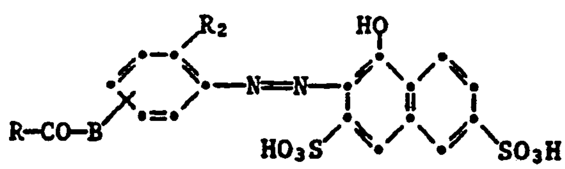 (32),

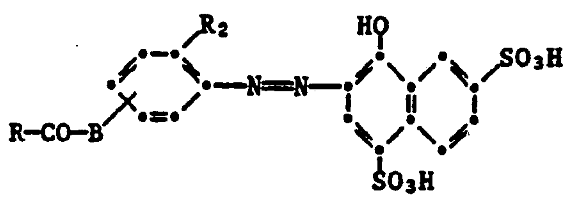 (33),

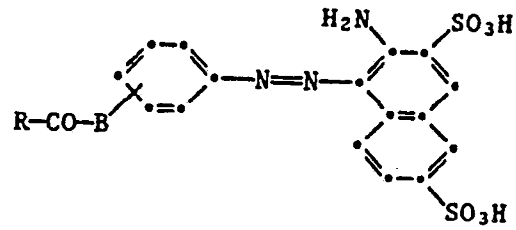

(34),

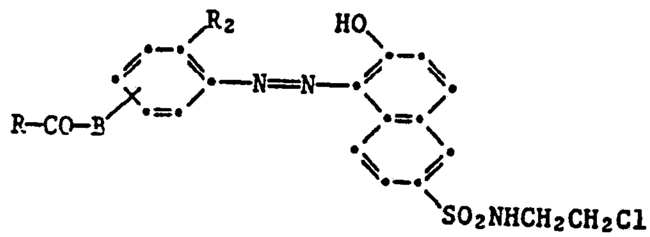

(35),

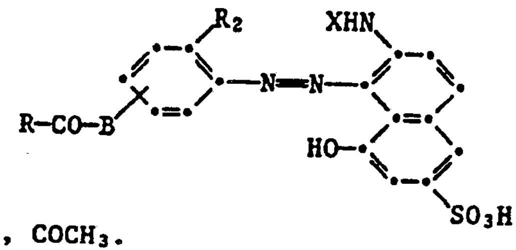

(36),

X: H, $COCH_3$.

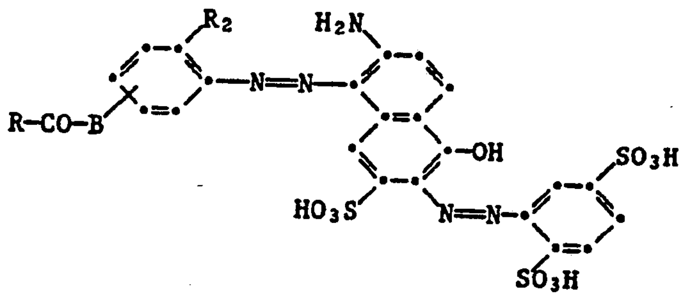

(37),

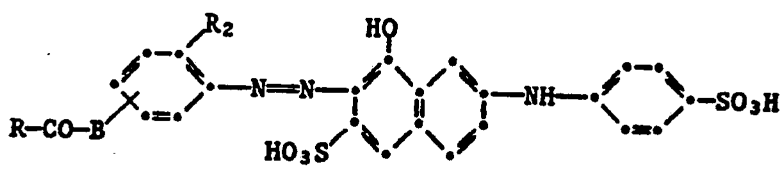

(38),

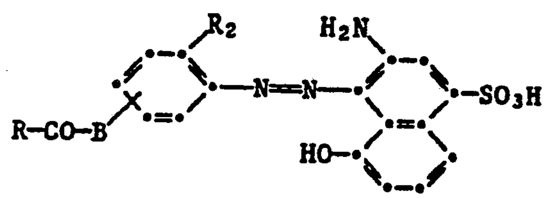

(39),

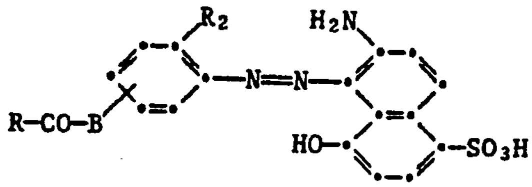

(40),

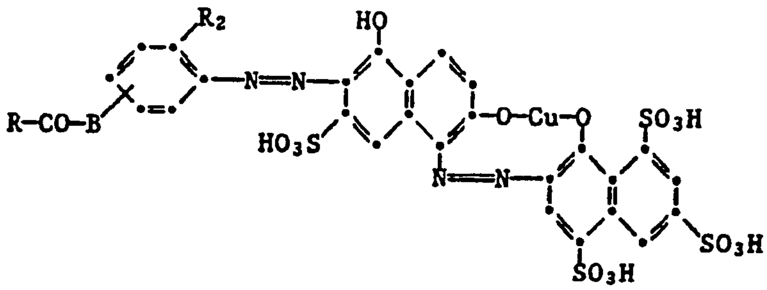

(41),

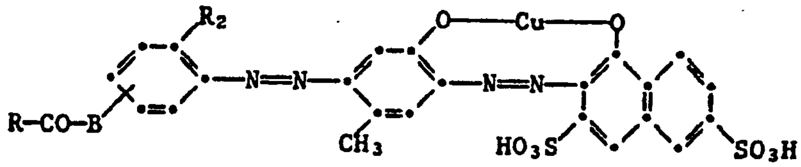

(42),

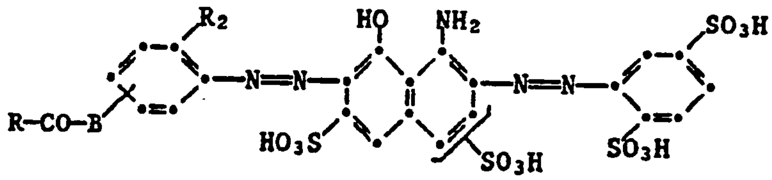

(43),

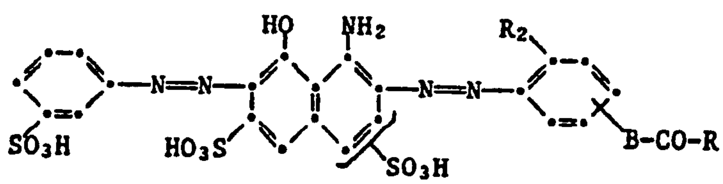

(44),

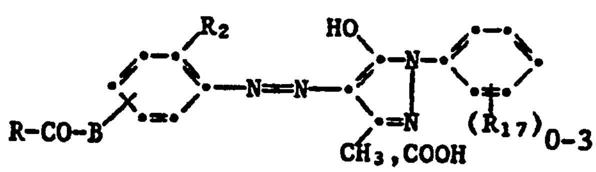

(45),

$R_{17}$: $C_{1-4}$-Alkyl, $C_{1-4}$-Alkoxy, Halogen, Carboxy, Sulfo.

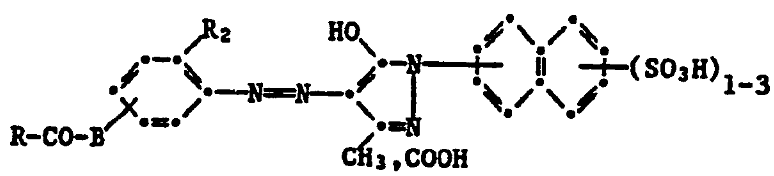

(46),

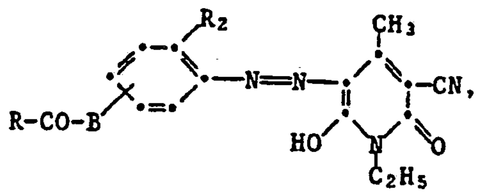 , $CONH_2$, $CH_2SO_3H$ (47) .

In den Formeln (17) bis (47) sind die Reste $R_9$, $R_{10}$,... etc., die zu ein und derselben Formel gehören, voneinander unabhängig, und R und $R_2$ haben die unter den Formeln (1) und (2) angegebenen Bedeutungen. Vorzugsweise bedeuten die Reste $R_9$ bis $R_{16}$ Wasserstoff, Methyl, Aethyl, Methoxy, Aethoxy, Acetylamino, Ureido oder Chlor. Der Rest $R_{17}$ ist vorzugsweise Methyl, Methoxy, Chlor oder Sulfo.

Die Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druck- pasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eins dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Miachgeweben, die Wolle oder Seide enthalten.

Die mit den erfindungsgemässen Farbstoffen hergestellten Färbungen und Drucke auf Cellulosefaaermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der EP-A-0174909 sind ähnliche Farbstoffe bekannt, die sich von den erfindungsgemässen Farbstoffen in charakteristischer Weise dadurch unterscheiden, dass der Reaktivrest R über ein —$CH_2$-NH-CO-NH— Brückenglied gebunden ist, während in den erfindungsgemässen Farbstoffen der Reaktivrest R über ein—$CH_2$-CO-NH— oder—O-$CH_2$-CO-NH— Brückenglied gebunden ist.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofem nicht anders vermerkt. Gewichtsteile stehen zu Volumteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1 :

Die salzsauer diazotierte Lösung von 31 Teilen 1-Amino-4-β-(β'-chloräthyl-sulfonyl)äthylaminocarbonylmethylbenzol wird bei 0 bis 5°C und pH = 4 bis 5 zu einer Lösung von 23 Teilen 3-Amino-acetanilid-4-sulfonsäure gegeben und gekuppelt. Der gelbe Monoazofarbstoff wird isoliert, er entspricht der Formel

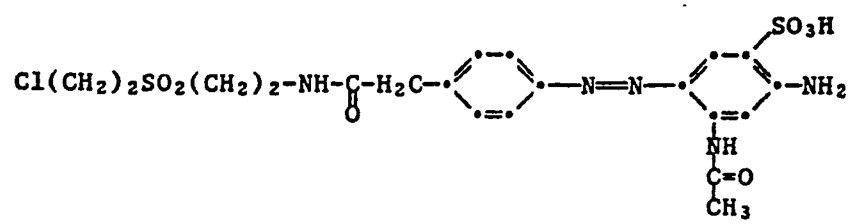

### Beispiel 2 :

Die salzsauer diazotierte Lösung von 37 Teilen 1-Amino-4-β-(β'-sulfatoäthyl-sulfonyl)-äthylaminocarbonylmethylbenzol wird bei 0 bis 5°C und pH = 4 bis 5 zu einer Lösung von 23 Teilen 3-Amino-acetanilid-4-sulfonsäure gegeben und gekuppelt. Der gelbe Monoazofarbstoff wird isoliert, er entspricht der Formel

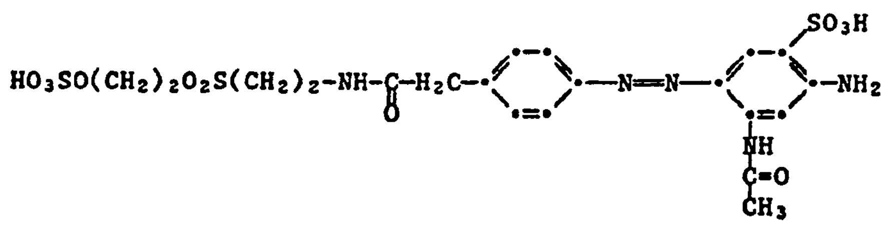

### Beispiel 3 :

Die in den Beispielen 1 und 2 erwähnten Farbstoffe werden bei Raumtemperatur und pH 10 30 Minuten vinyliert. Der pH-Wert wird mit Salzsäure auf 6,0 zurückgestellt. Der Monoazofarbstoff wird isoliert, er entspricht der Formel

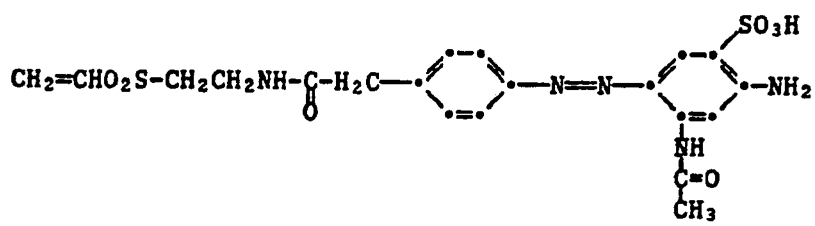

### Beispiel 4 :

Die salzsauer diazotierte Lösung von 32 Teilen 1-Amino-4-β-(β'-chloräthyl-sulfonyl)äthylaminocarbonylmethoxybenzol wird bei 0 bis 5°C und pH = 5 bis 6 zu einer Lösung von 28,4 Teilen 1-(4'-Sulfophenyl)-3-carboxy-5-pyrazolon gegeben und gekuppelt. Der goldgelbe Monoazofarbstoff wird isoliert; er entspricht der Formel

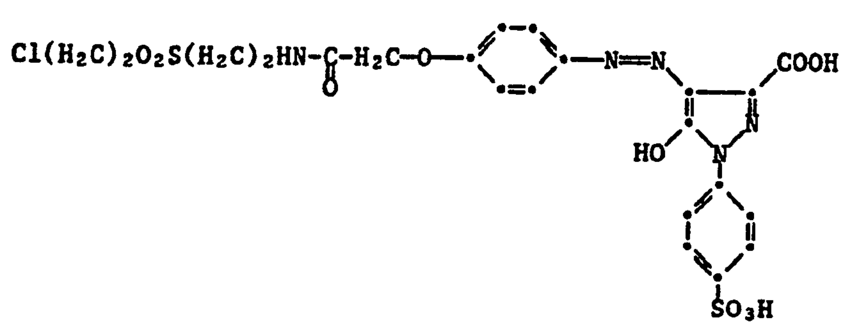

Beispiel 5 :

Die salzsauer diazotierte Lösung von 40 Teilen 1-Amino-4-β-(β'-sulfatoäthylsulfonyl)äthylaminocarbonylmethoxybenzol wird bei 0 bis 5°C und pH = 5 bis 7 zu einer Lösung von 29 Teilen 1-Aethyl-3-amino-carbonyl-4-methyl-5-sulfomethyl-6-hydroxypyridon-2 gegeben und gekuppelt. Der gelbe Monoazofarbstoff wird isoliert, er entspricht der Formel

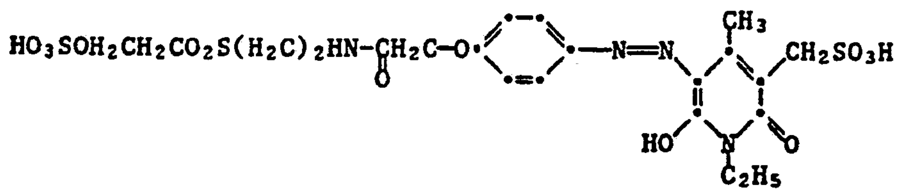

Beispiel 6 :

Zu einer salzsauer diazotierten Lösung von 80 Teilen 1-Amino-4-β-(β'-chloräthylsulfonyl)äthylaminocarbonylmethoxybenzol-3-sulfonsäure werden 1200 Teile einer neutralen Lösung von 56,2 Teilen 2-Acetylamino-5-napthol-7-sulfonsäure in 400 Teilen Eis/Wasser-Mischung getropft und bei pH 6 bis 7 gekuppelt. Anschliessend wird der Farbstoff mit Kochsalz abgeschieden.

Das Pressgut wird durch Zerstäubungstrocknung getrocknet. Man erhält ein Pulver, das Baumwolle in reinen orangen-scharlach Tönen färbt, und folgende Struktur aufweist.

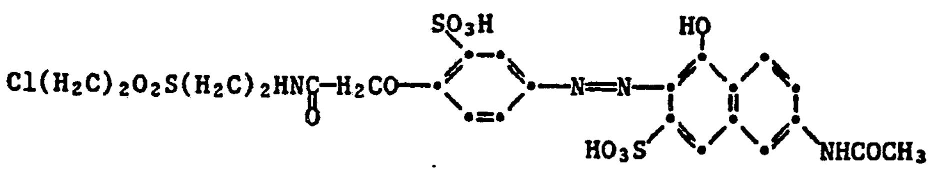

Beispiel 7 :

Die salzsauer diazotierte Lösung von 30 Teilen 1-Amino-4-β-(β'-chloräthyl-sulfonyl)äthylaminocarbonylmethylbenzol wird bei 0 bis 5°C und pH = 5 bis 6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert.

Der gebildete Chlortriazinfarbstoff wird isoliert ; er entspricht der Formel

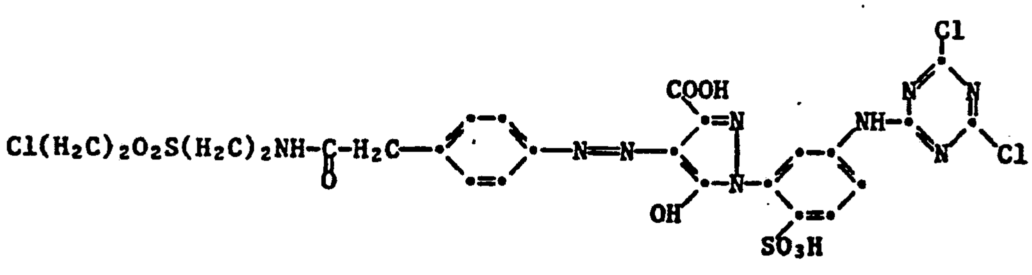

Beispiel 8 :

195 Teile Cyanurchlorid werden in 800 Volumenteilen Aceton gelöst ; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 239 Teilen 2-Amino-5-naphthol-7-sulfonsäure, 65 Teilen Natriumcarbonat und 2000 Teilen Wasser einlaufen. Die Umsetzung des Cyanurchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit 810 Teilen diazotiertem 1-Amino-4-β-(β'-chloräthyl-sulfonyl)äthylaminocarbonylmethoxybenzol-3-sulfonsäure versetzt. Man rührt 2 Stunden lang und erhöht in dieser Zeit durch portionsweises Einstreuen von Natriumcarbonat den pH-Wert auf 6,5 bis 7.0. Es wird noch eine Stunde bei diesem pH-Wert und bei Raumtemperatur weitergerührt. Anschliessend gibt man 173 Teile Anilin-m-sulfonsäure und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

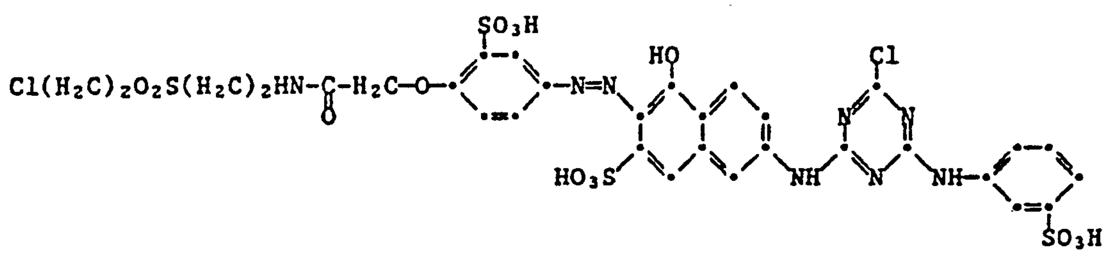

enthält.

Diese Azoverbindung eignet sich hervorragend als Farbstoff. In Folge seiner faserreaktiven Eigenschaften liefert er beispielsweise aus wässrig-alkalischer Flotte nach einem üblichen Auszieh- oder Klotzverfahren farbtiefe, gelbstichige Scharlach-Färbungen auf Baumwollfasern. Die Färbungen besitzen sehr gute Wasch- und Lichtechtheiten.

Beispiel 9 :

64 Teile 1-Amino-8-napthol-3,6-disulfonsäure werden in 800 Teilen Wasser unter Zusatz von 30%iger Natriumhydroxidlösung bei pH 5,0 gelöst. Man erwärmt dann auf 30°C und lässt 42 Teile 2,4-Dichlor-6-isopropoxy-trizin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingestzt.

Zur Herstellung der Diazoniumverbindung werden 61 Teile 1-Amino-4-β-(β'-chloräthyl-sulfonyl)äthylaminocarbonylmethylbenzol in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

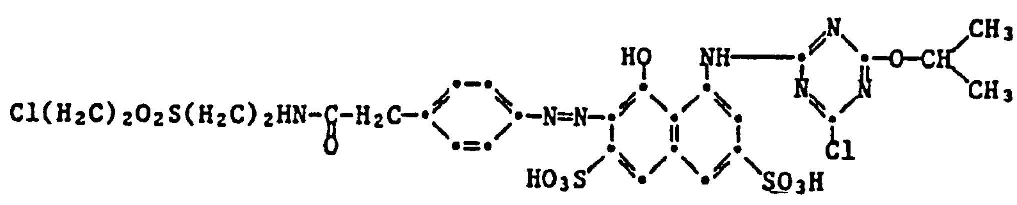

enthält.

Diese Verbindung besitzt sehr gute Farbstoffeigenschaften und färbt Cellulosematerialien nach den üblichen Färbe- und Druckverfahren für Reaktivfarbstoffe in roten Tönen mit sehr guten Nassechtheitseigenschaften.

Beispiel 10 :

64 Teile 1-Amino-8-napthol-3,6-disulfonsäure werden in 800 Teilen Wasser unter Zusatz von 30%iger Natriumhydroxidlösung bei pH 9,0 bis 9,5 gelöst. Man kühlt dann auf 10°C ab und lässt 34 Teile 2,4,6-Trifluor-5-chlor-pyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9 und 15°C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 81 Teile 1-Amino-4-β-(β'-chloräthylsulfonyl)äthylaminocarbonylmethoxybenzol-3-sulfonsäure in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes elektrolythaltiges Farbstoffpulver erhalten, das das Natriumsalz der Verbindung der Formel

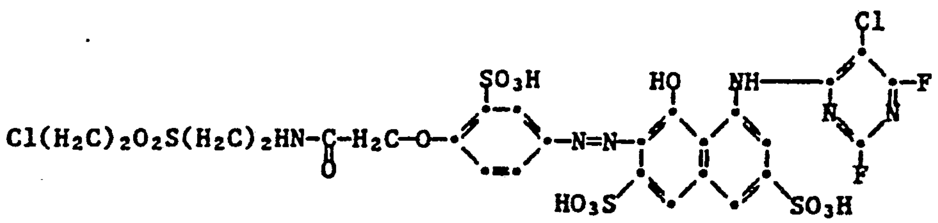

enthält.

Diese Verbindung besitzt sehr gute Farbstoffeigenschaften und färbt Cellulosematerialien nach den üblichen Färbe- und Druckverahren für Reaktivfarbstoffe in blaustichig roten Tönen mit sehr guten Nassechtheitseigenschaften.

Beispiel 11 :

64 Teile 1-Amino-8-naphthol-3,6-disulfonsäure werden in 800 Teilen Wasser unter Zusatz von 30%iger Natriumhydroxidlösung bei pH 5,0 gelöst. Man erwärmt dann auf 60°C und lässt 45 Teile 2,4,5,6-Tetrachlorpyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 81 Teile 1-Amino-4-β-(β'-chloräthyl-sulfonyl)äthylaminocarbonylmethoxybenzol in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

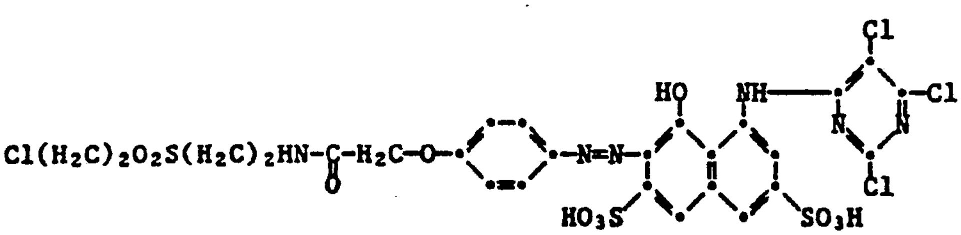

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigneschaften.

Beispiel 12 :

31,9 Teile 1-Amino-8-hydroxynaphthalin-3,6-disulfonsäure werden in 800 ml Wasser neutral gelöst und die Lösung auf 0 bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n-Natriumhydroxydlösung schwach kongosauer gehalten wird. Nach Zusatz einer auf pH 5 gestellten Mischung von 11 Teilen N-Methylanilin in 100 ml Wasser wird der pH der Reaktionsmischung durch ständige Zugabe von 2n-Natriumhydroxydlösung zuerst kurze Zeit schwach kongosauer und dann bei 5 bis 6 gehalten. Dabei wird die Temperatur innert 2 bis 3 Stunden auf 20 bis 25°C erhöht. Nach vollständiger Reaktion wird dieses Zwischenprodukt bei 0 bis 10°C und pH 6,5 mit 37 Teilen diazotiertem 1-Amino-4-β-(β'-chloräthylsulfonyl)äthylaminocarbonylmethylbenzol gekuppelt. Nach vollständiger Kupplungsreaktion bei pH 8 wird die Reaktionsmischung geklärt und der gebildete Reaktivfarbstoff der Formel

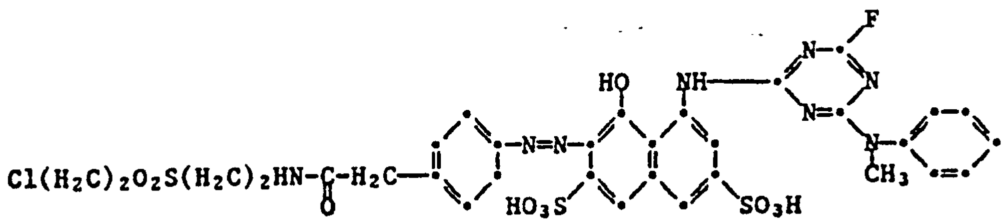

durch Eindampfen oder Gefriertrocknen der Reaktionslösung bei pH 7 isoliert. Er färbt Baumwolle in roten Tönen.

Beispiel 13 :

Die wässrige Lösung des in Beispiel 12 erwähnten Farbstoffs wird bei Raumtemperatur und pH-Wert 10 etwa 30 Minuten lang vinyliert. Der pH-Wert wird mit Salzsäure auf 6,5 zurückgestellt. Der Monoazofarbstoff wird isoliert, er entspricht der Formel

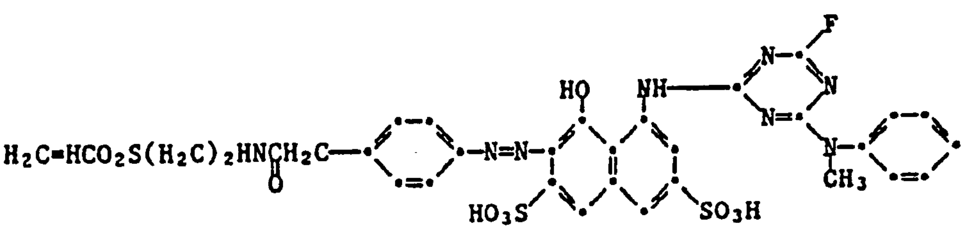

und färbt Baumwolle in roten Tönen.

Beispiel 14 :

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen ; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt : Eine Lösung mit einem pH-Wert von 6,7 bis 6,8 von 325 Teilen 1-Amino-4-β-(β'chloräthylsulfonyl)äthylaminocarbonylmethoxybenzol-3-sulfonsäure in 640 Teilen Wasser werden mit 105 Volumenteilen einer 40%igen wässrigen Natriumnitritlösung versetzt. Dieses Gemisch lässt man unter gutem Rühren in eine Mischung aus 800 Teilen zerkleinertem Eis und 70 Volumenteilen einer 95%igen wässrigen Schwefelsäure einfliessen. Man rührt noch eine Stunde bei einer Temperatur zwischen 0 und 5°C nach und zersetzt sodann, wie üblich, überschüssige salpeterige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 240 Teilen HCl, $H_2NCH_2CH_2OCH_2CH_2SO_2CH_2CH_2Cl$ in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

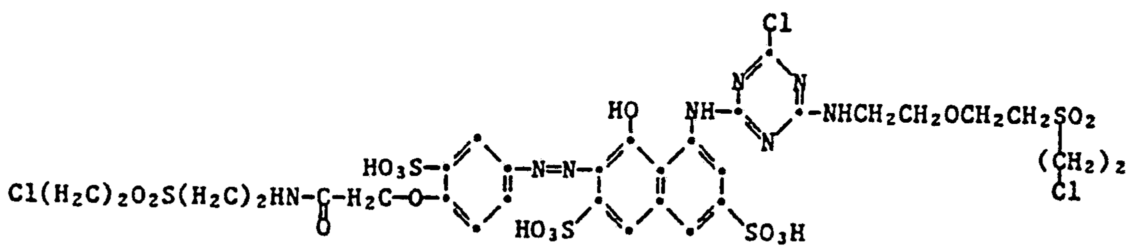

erhalten. Es färbt Baumwolle in roten Tönen.

Beispiel 15 :

Die wässrige Lösung des in Beispiel 14 erwähnten Farbstoffes wird bei Raumtemperatur und pH-Wert 10 etwa 40 Minuten lang vinyliert. Anschliessend wird der pH-Wert mit Salzsäure auf 6,0 zurückgestellt und der Monoazofarbstoff sprühgetrocknet. Er entspricht der Formel

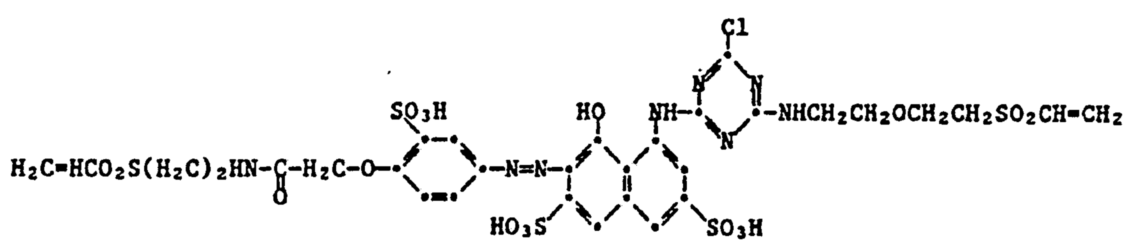

und färbt Baumwolle in roten Tönen, mit sehr guten Echtheitseigenschaften.

Beispiel 16 :

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 76 Teile 1-Amino-4-β-(β'-chloräthyl-sulfonyl)äthylaminocarbonylmethylbenzol analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des

Reaktionsansatzes, gegebenenfalls nach einer Klärfiltration, isoliert.

Es wird ein schwarzes, elektrolythaltiges Pulver erhalten, das die Natriumverbindung der Formel

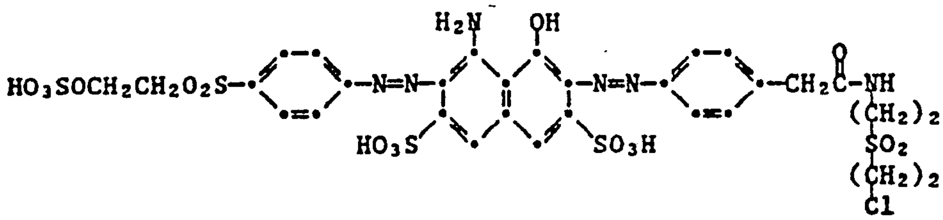

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 17 :

Die wässrige Lösung des in Beispiel 16 erwähnten Farbstoffes wird bei Raumtemperatur und pH-Wert 10 etwa 30 Minuten lang vinyliert. Anschliessend wird der pH-Wert mit Salzsäure auf 5,0 zurückgestellt und der Monoazofarbstoff sprühgetrocknet. Er entspricht der Formel

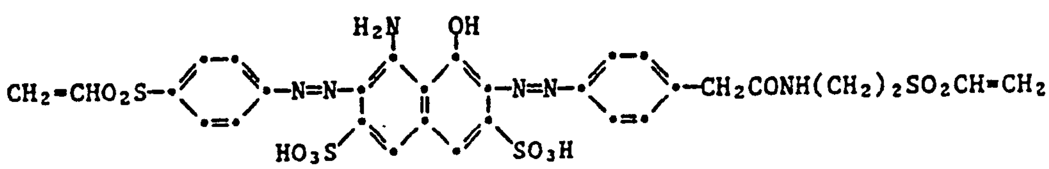

und färbt Baumwolle in marineblauen Farbtönen mit sehr guten Echtheitseigenschaften.

Beispiel 18 :

80 Teile 1-Amino-4-β-(β'-chloräthylsulfonyl)äthylaminocarbonylmethoxybenzol werden in 325 Teile Wasser eingetragen und bei 20 bis 22°C innerhalb einer Stunde mittels Natriumbicarbonat bei einem pH-Wert von 5,3 bis 6.0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 80 Teile 4-β-Sulfatoäthylsulfonyl-2-sulfoanilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Disazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

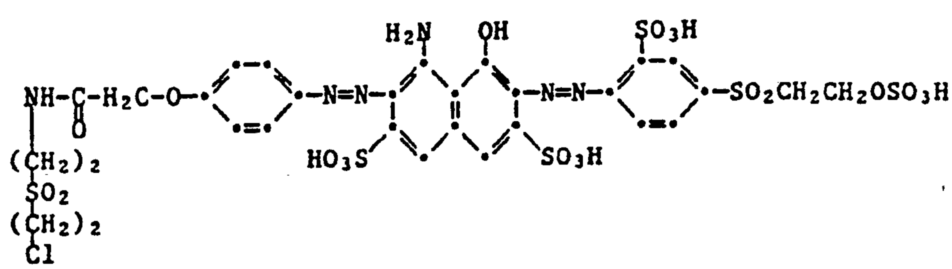

enthält, dieses färbt Baumwolle in marineblauen Farbtönen mit sehr guten Echtheitseigenschaften.

Beispiel 19 :

76 Teile 1-Amino-4-β-(β'-chloräthylsulfonyl)äthylaminocarbonylmethylbenzol werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 92 Teile 1-Amino-4-β-(β'-chloräthyl-sulfonyl)äthylaminocarbonylbenzol-2-sulfonsäure analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Disazoverbindung wird durch Eindampfen des Reaktionsansatzes, gegebenenfalls nach einer Klärfiltration, isoliert.

Es wird ein schwarzes, elektrolyhaltiges Pulver erhalten, das die Natriumverbindung der Formel

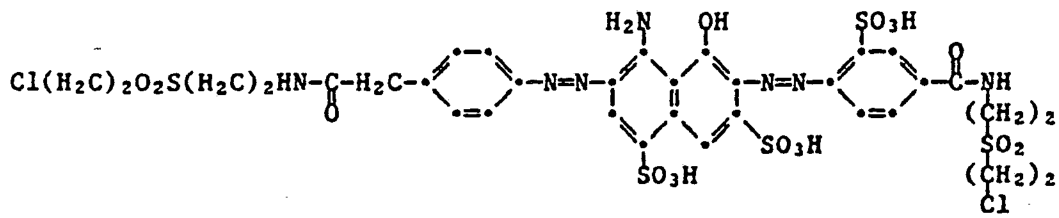

enthält, diese eignet sich sehr gut als Farbstoff zum Färben von Cellulsoefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Analog zu den beschriebenen Methoden der Beispiele 1-19 lassen sich auch die in der folgenden Tabelle aufgeführten Farbstoffe herstellen, die Baumwolle in dem angegebenen Farbton färben.

| Nr. | | Farbton |
|---|---|---|
| 20 | 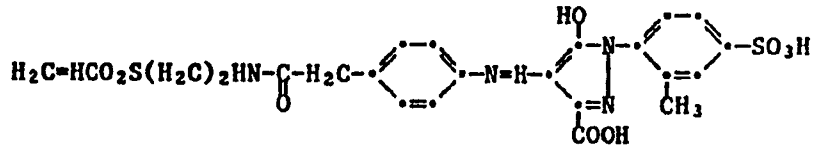 | gelb |
| 21 | 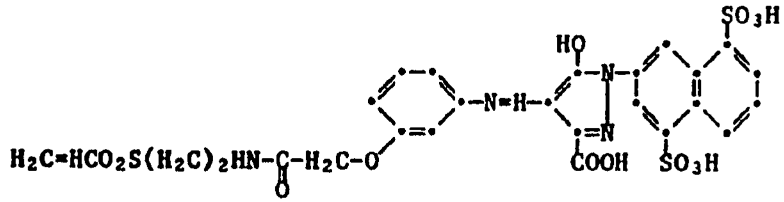 | goldgelb |
| 22 | 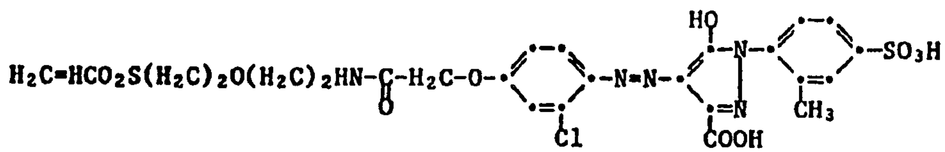 | goldgelb |
| 23 | 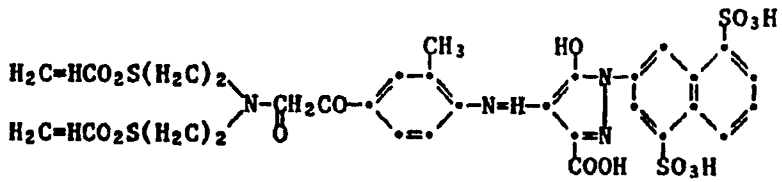 | goldgelb |
| 24 | 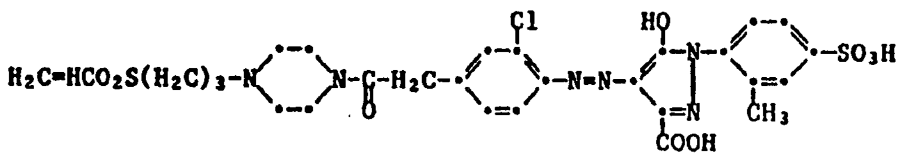 | gelb |

| Nr. | | Farbton |
|---|---|---|
| 25 | 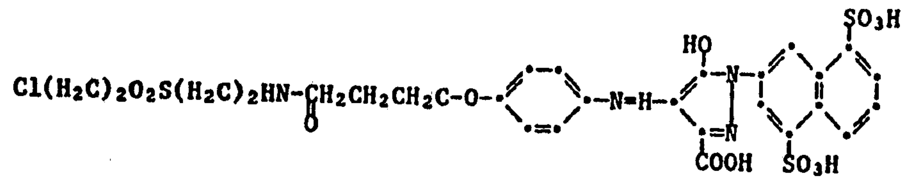 | goldgelb |
| 26 | 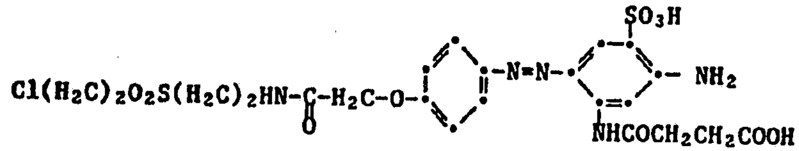 | goldgelb |
| 27 | 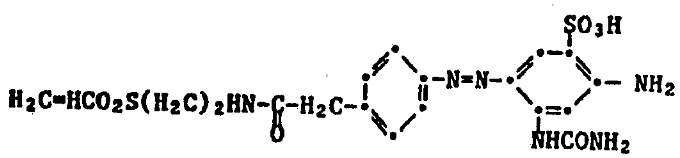 | goldgelb |
| 28 | 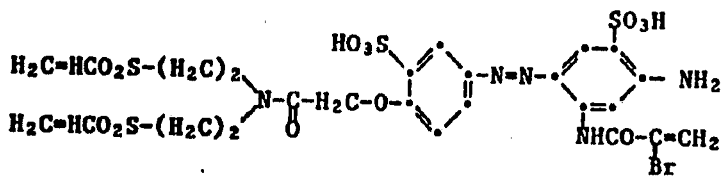 | goldgelb |
| 29 | 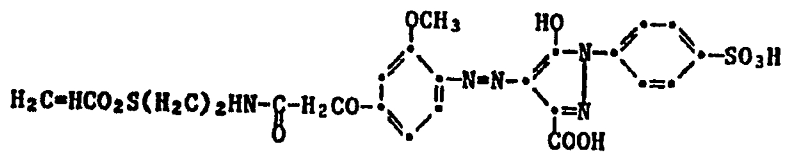 | goldgelb |

| Nr. | | Farbton |
|---|---|---|
| 30 | 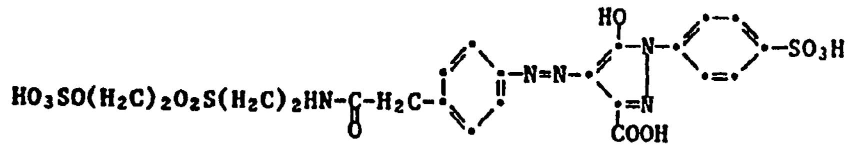 | goldgelb |
| 31 | 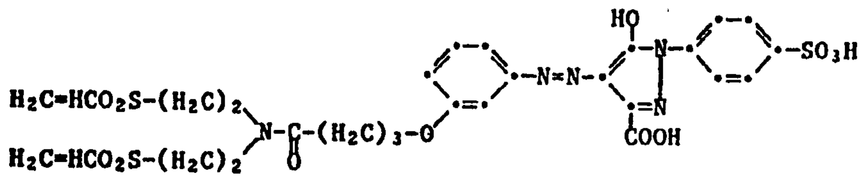 | goldgelb |
| 32 | 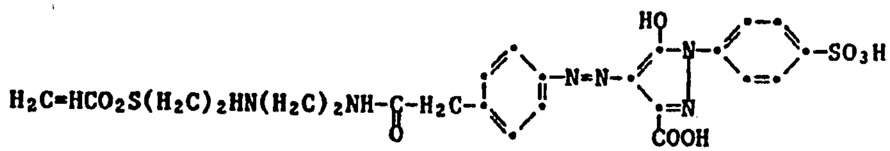 | goldgelb |
| 33 | 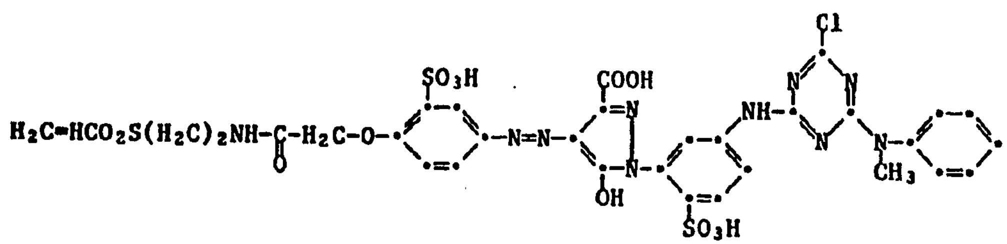 | goldgelb |

| Nr. | | Farbton |
|---|---|---|
| 34 | 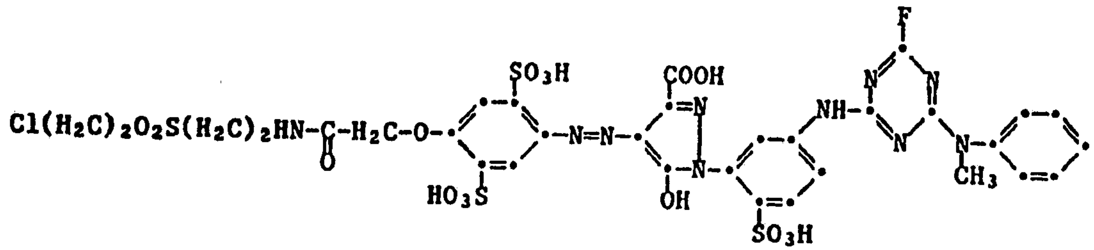 | gelb |
| 35 | 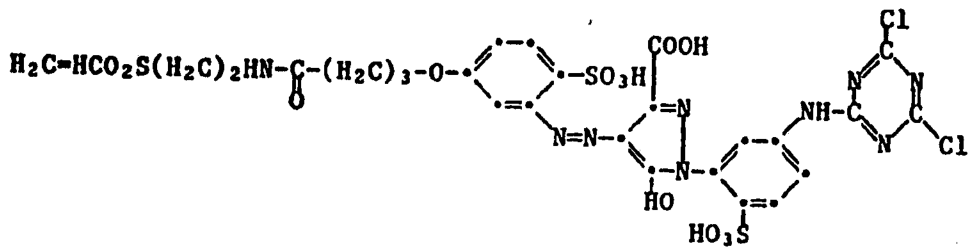 | gelb |
| 36 | 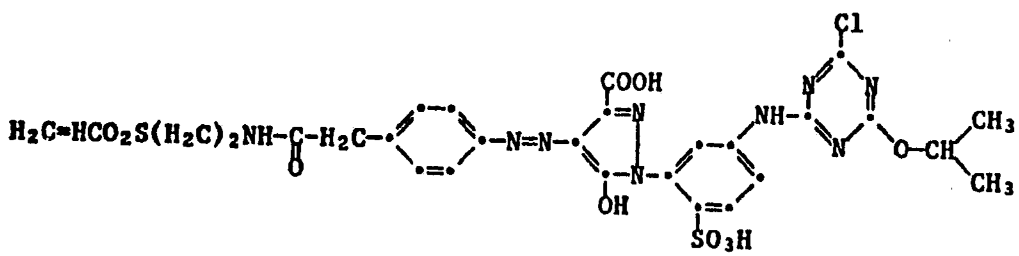 | gelb |

| Nr. | | Farbton |
|---|---|---|
| 37 | 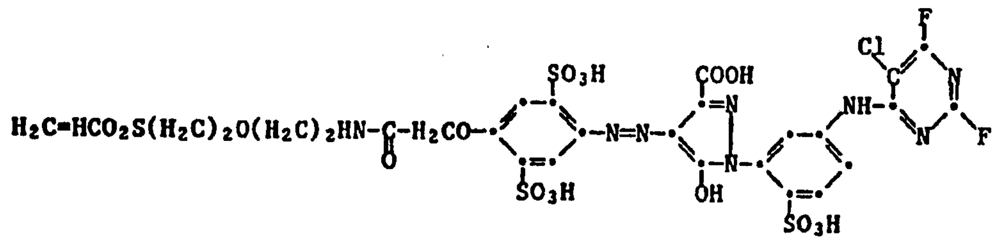 | gelb |
| 38 | 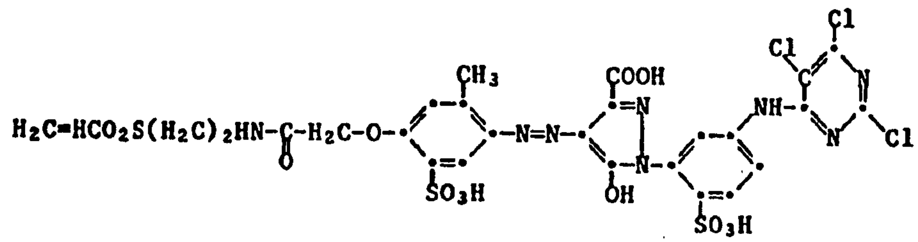 | goldgelb |
| 39 | 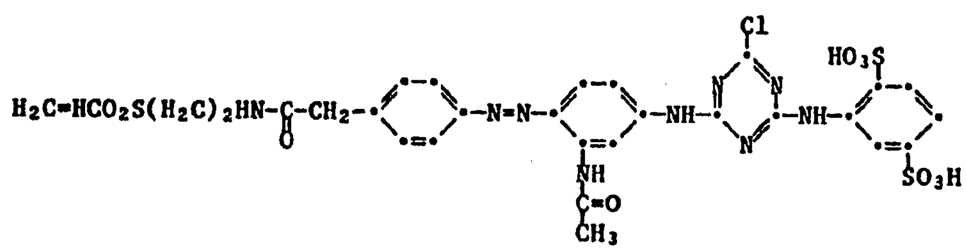 | goldgelb |
| 40 | 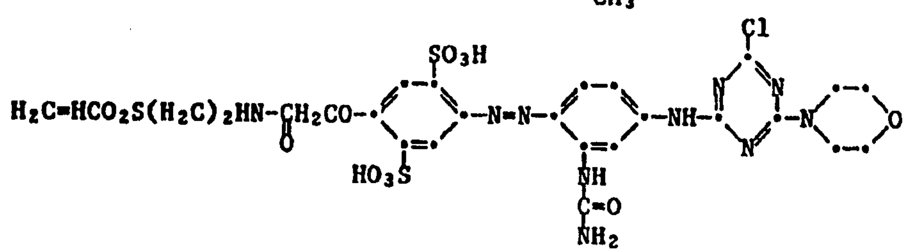 | goldgelb |

| Nr. | | Farbton |
|---|---|---|
| 41 | 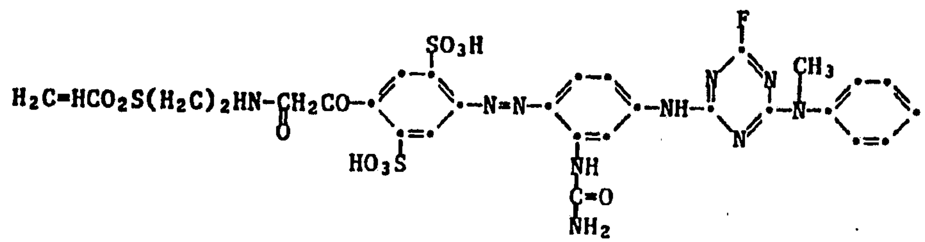 | goldgelb |
| 42 | 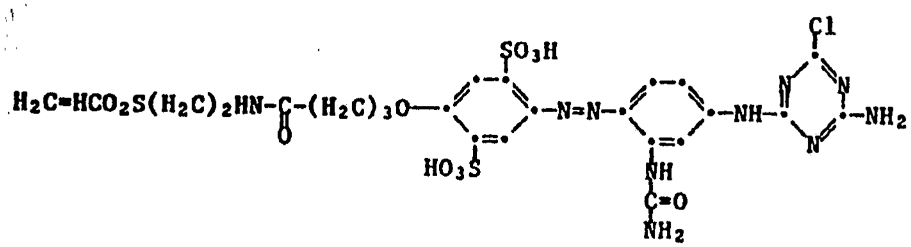 | goldgelb |
| 43 | 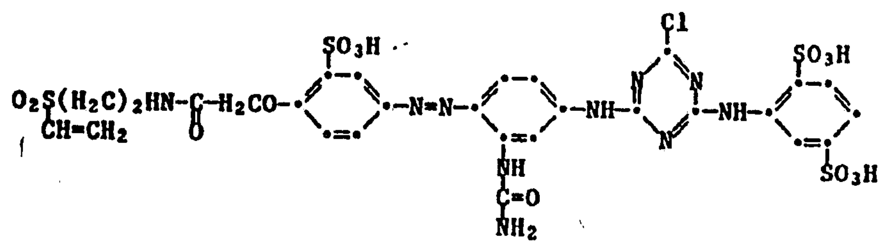 | goldgelb |

| Nr. | | Farbton |
|---|---|---|
| 44 | 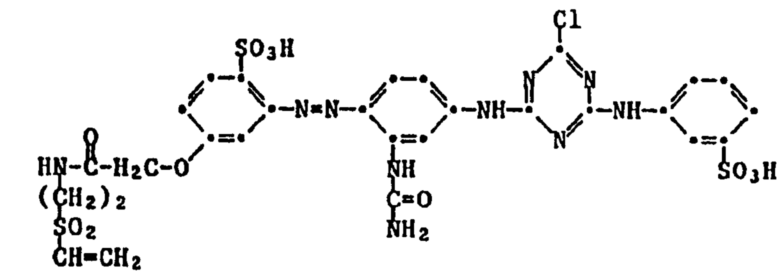 | goldgelb |
| 45 | 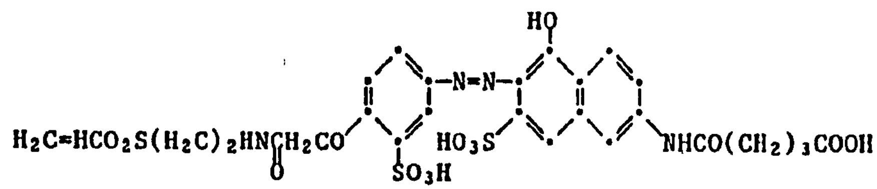 | scharlach |
| 46 | 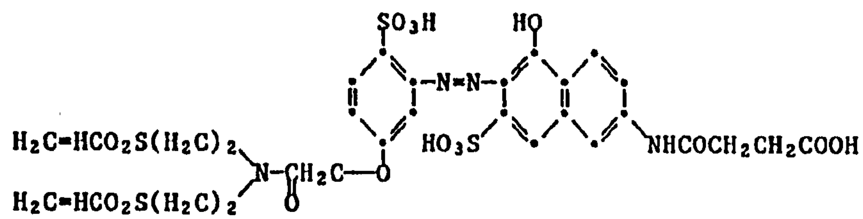 | orange |
| 47 | 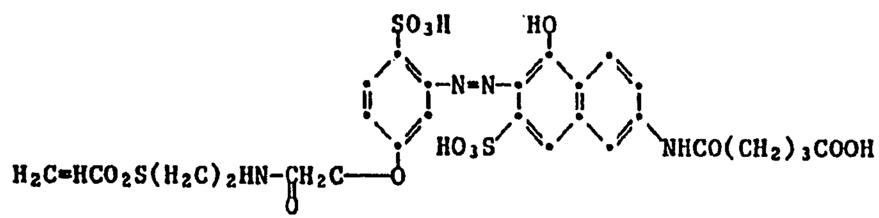 | orange |

| Nr. | | Farbton |
|---|---|---|
| 48 | 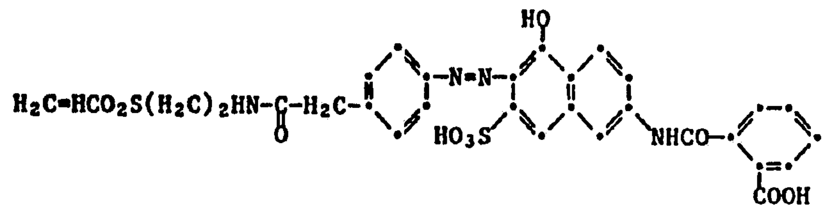 | orange |
| 49 | 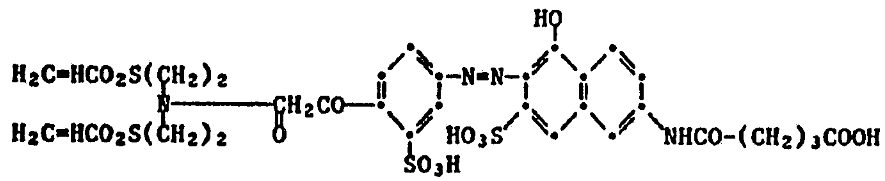 | scharlach |
| 50 | 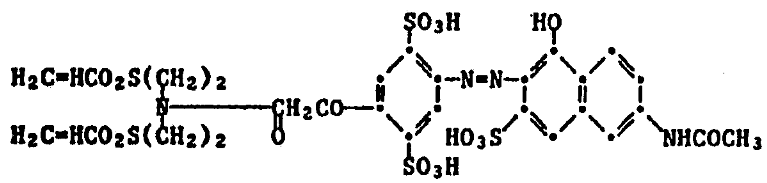 | orange |
| 51 | 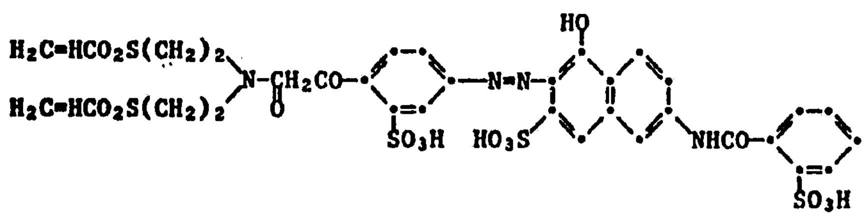 | scharlach |

| Nr. | | Farbton |
|---|---|---|
| 52 | 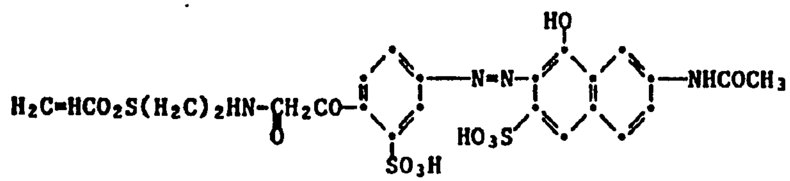 | rot |
| 53 | 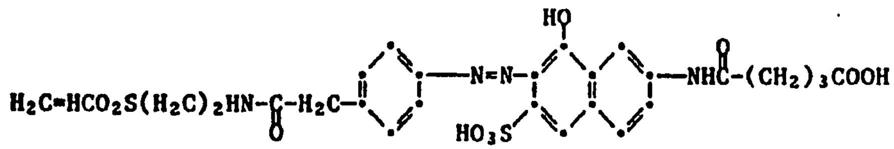 | rot |
| 54 | 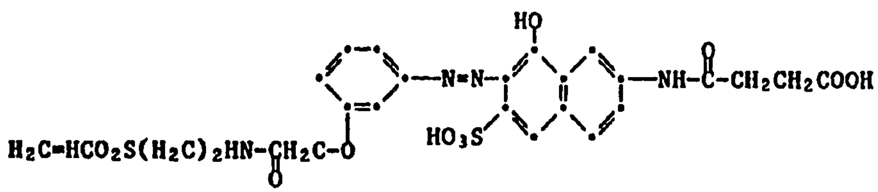 | rot |
| 55 | 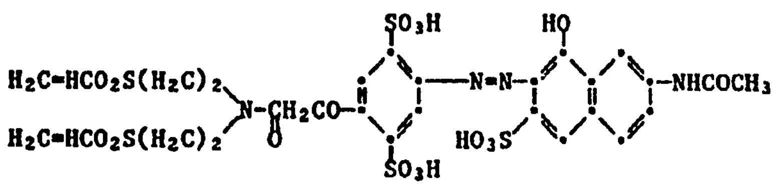 | scharlach |

| Nr. | | Farbton |
|---|---|---|
| 56 | 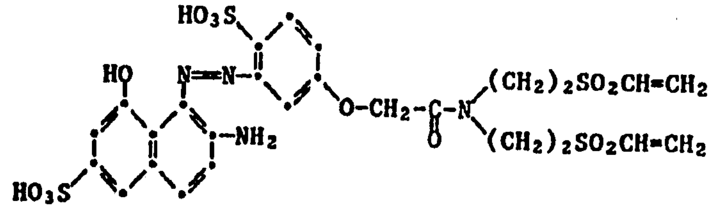 | rot |
| 57 | 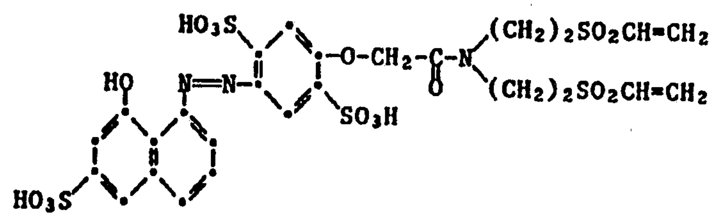 | rot |
| 58 | 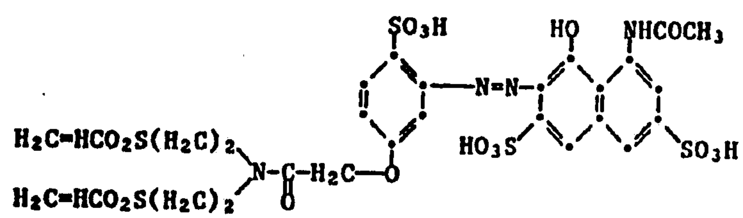 | rot |
| 59 | 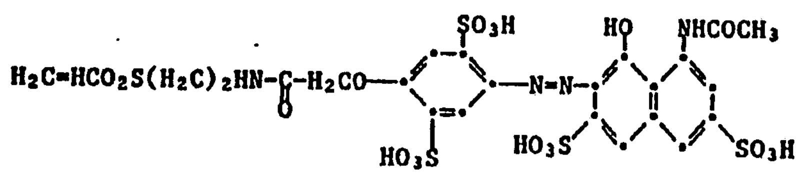 | rot |

| Nr. | | Farbton |
|---|---|---|
| 60 | 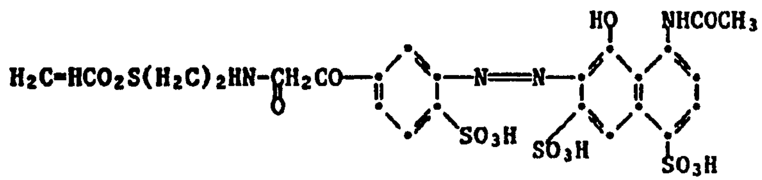 | rot |
| 61 | 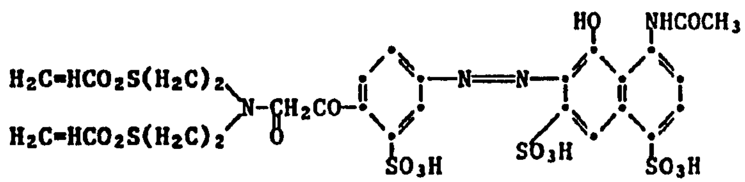 | rot |
| 62 | 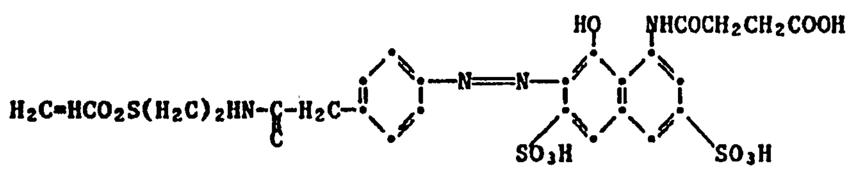 | rot |
| 63 | 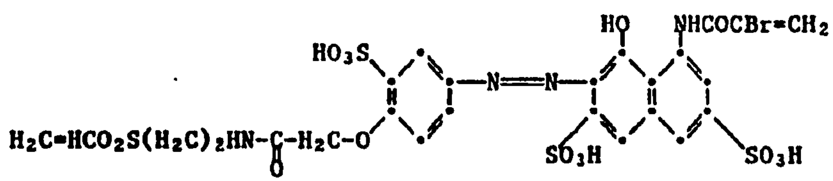 | rot |

| Nr. | | Farbton |
|---|---|---|
| 64 | 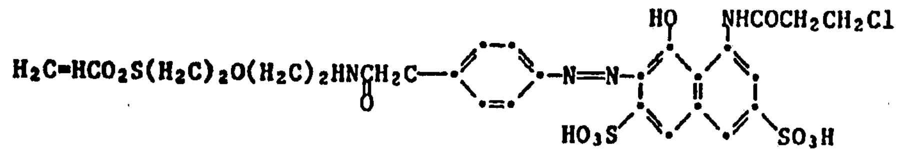 | rot |
| 65 | 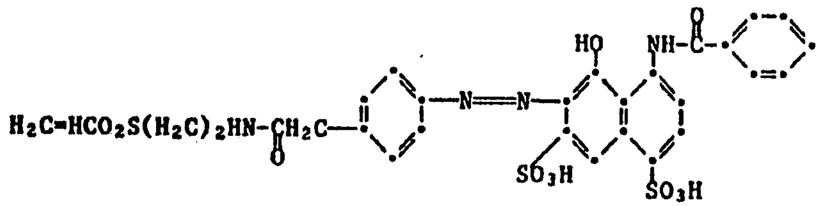 | rot |
| 66 | 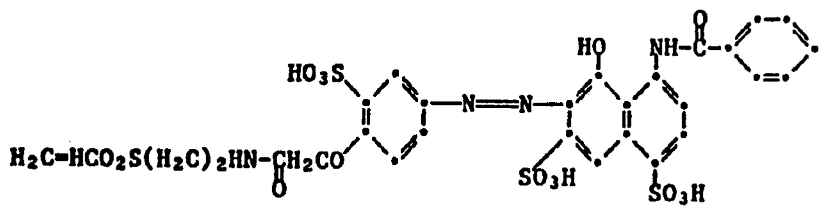 | rot |
| 67 | 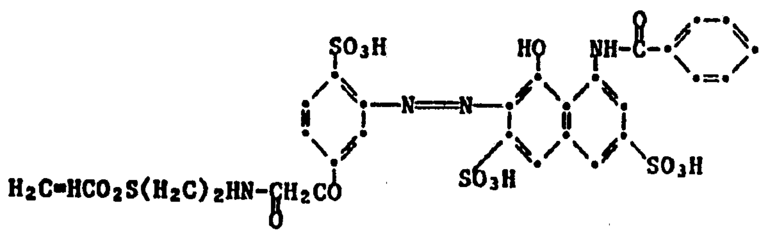 | rot |

| Nr. | | Farbton |
|---|---|---|
| 68 | 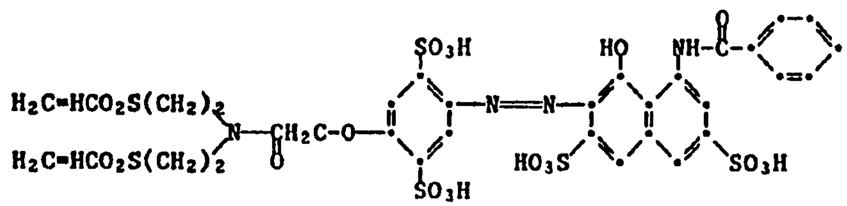 | rot |
| 69 | 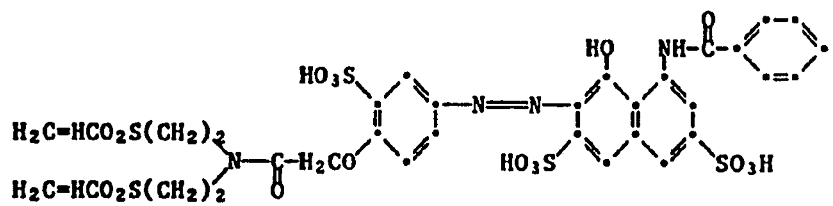 | blau-rot |
| 70 | 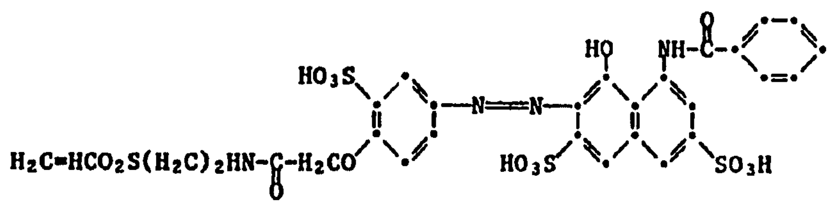 | blau-rot |
| 71 | 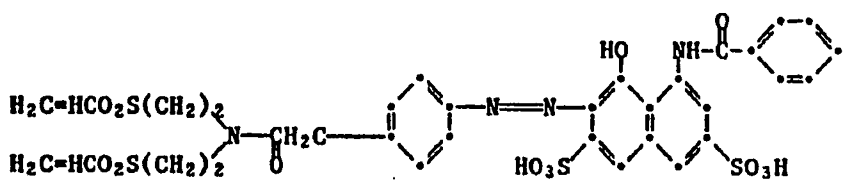 | rot |

| Nr. | | Farbton |
|---|---|---|
| 72 | 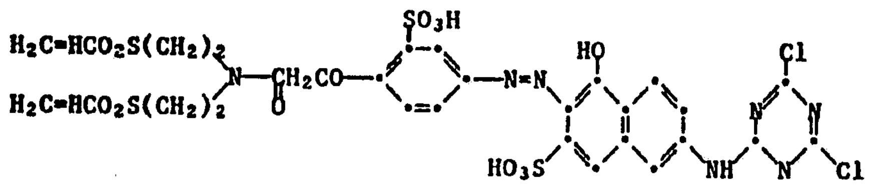 | scharlach |
| 73 | 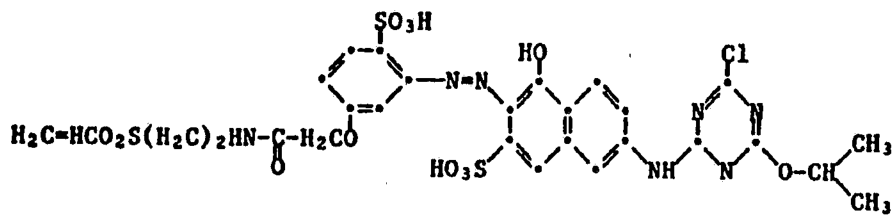 | scharlach |
| 74 | 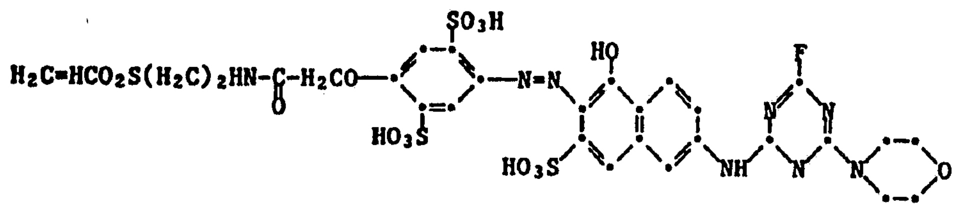 | scharlach |
| 75 | 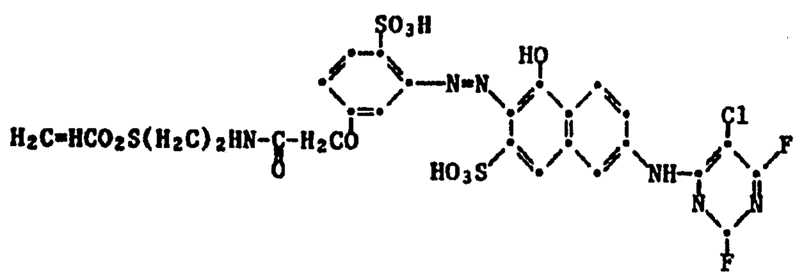 | scharlach |

| Nr. | | Farbton |
|---|---|---|
| 76 | 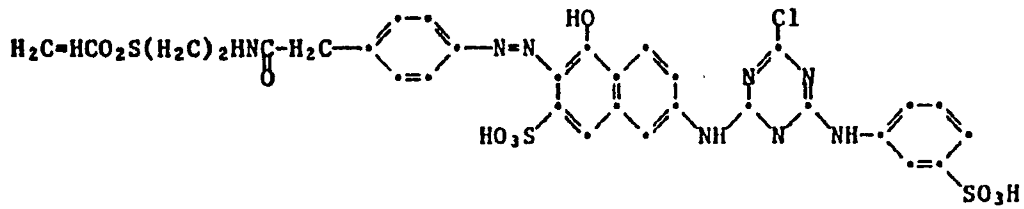 | orange |
| 77 | 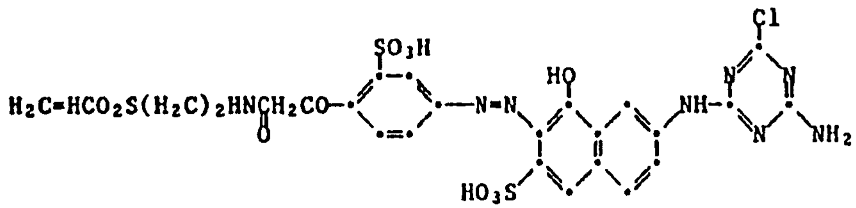 | rot |
| 78 | 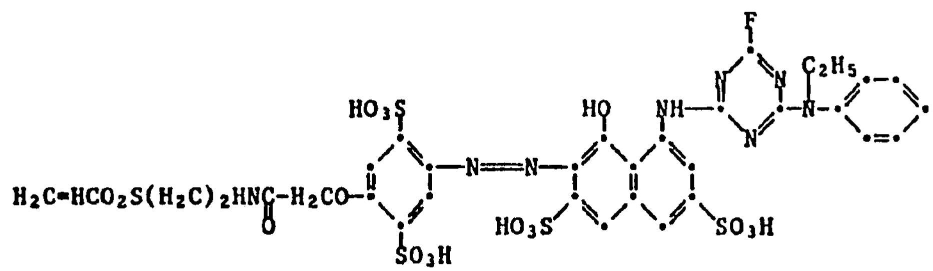 | rot |

| Nr. | | Farbton |
|---|---|---|
| 79 | 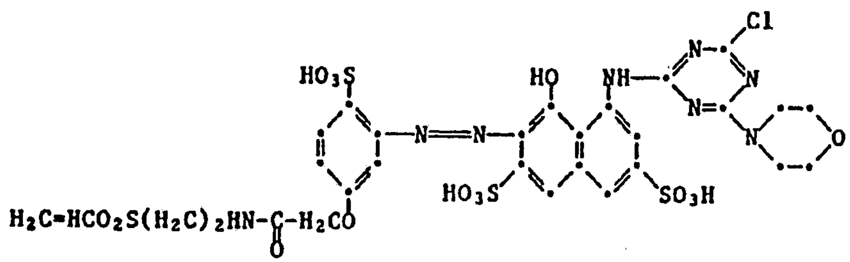 | rot |
| 80 | 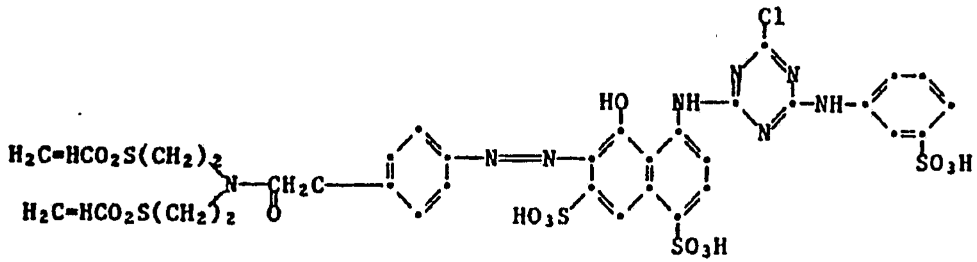 | rot |
| 81 | 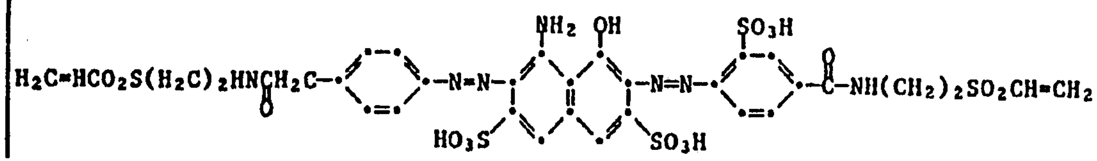 | marine-blau |

| Nr. | | Farbton |
|---|---|---|
| 82 | 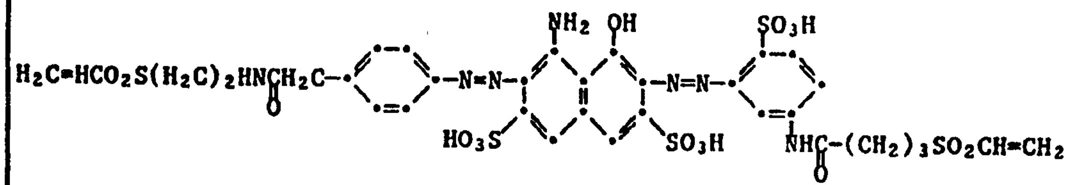 | marine-blau |
| 83 | 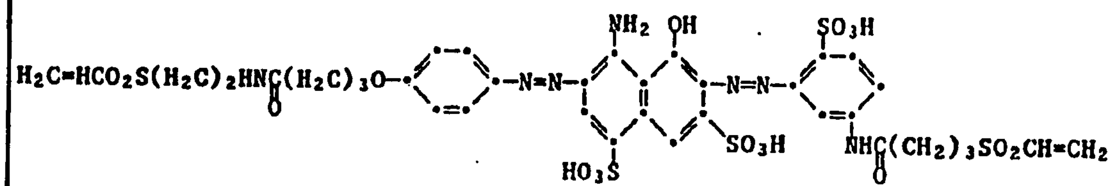 | marine-blau |
| 84 | 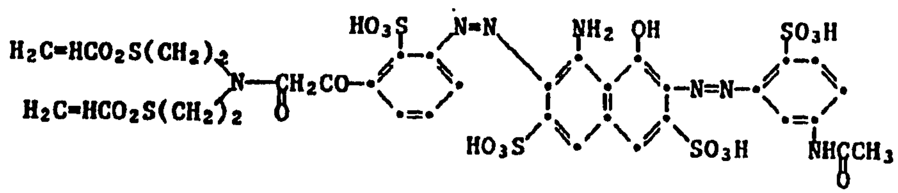 | marine-blau |
| 85 | 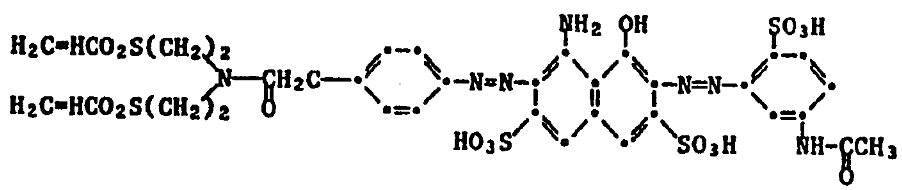 | marine-blau |

| Nr. | | Farbton |
|---|---|---|
| 86 | 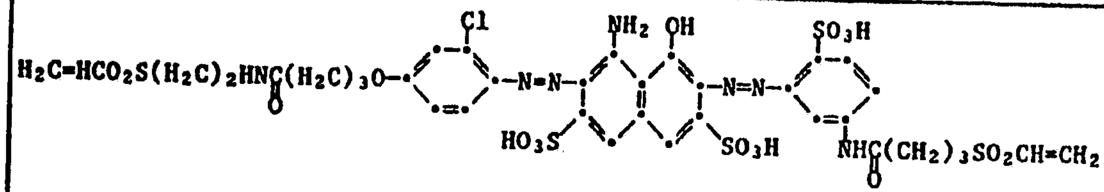 | marine-blau |
| 87 | 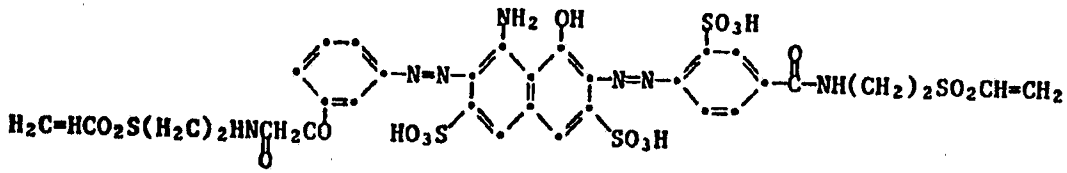 | marine-blau |
| 88 | 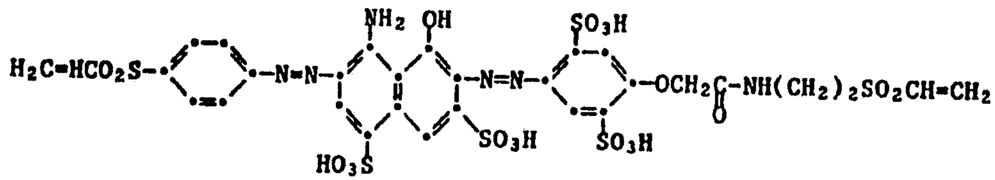 | marine-blau |
| 89 | 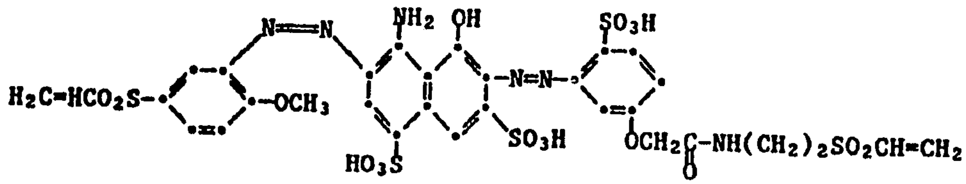 | marine-blau |

| Nr. | | Farbton |
|---|---|---|
| 90 | 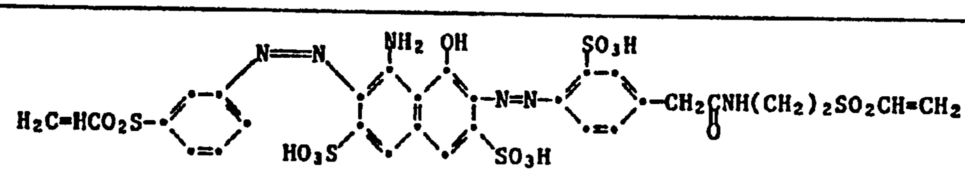 | marine-blau |
| 91 | 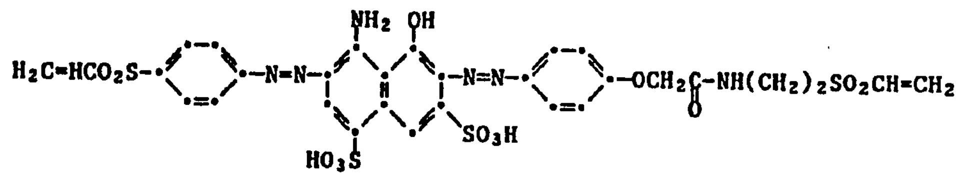 | marine-blau |
| 92 | 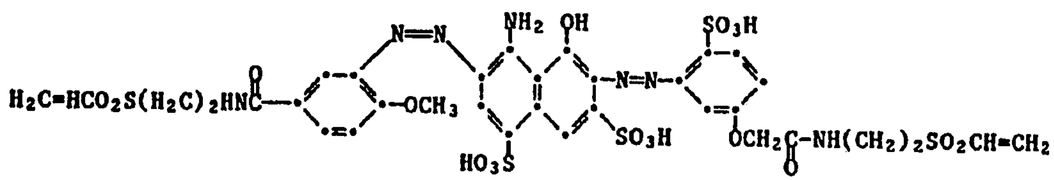 | marine-blau |
| 93 | 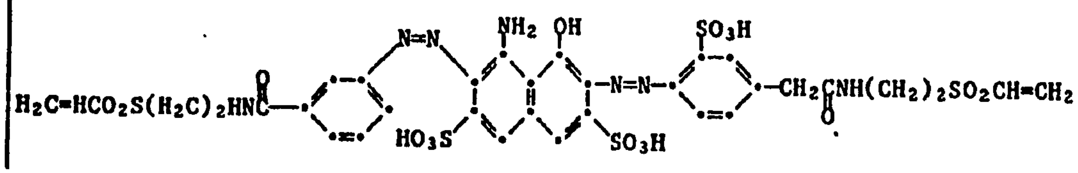 | marine-blau |

| Nr. | | Farbton |
|---|---|---|
| 94 | 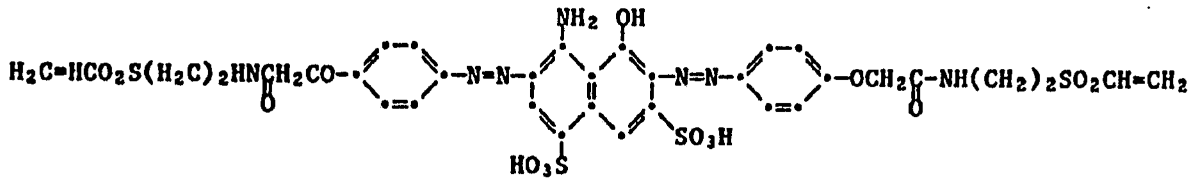 | marine-blau |
| 95 | 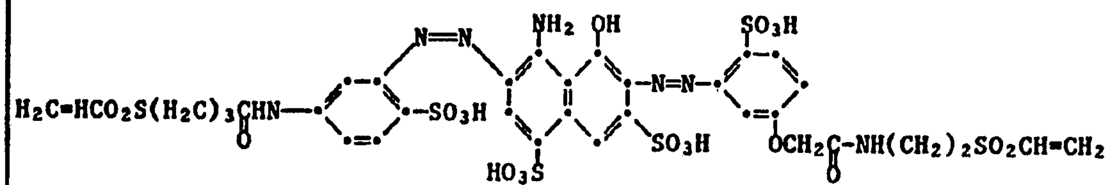 | marine-blau |
| 96 | 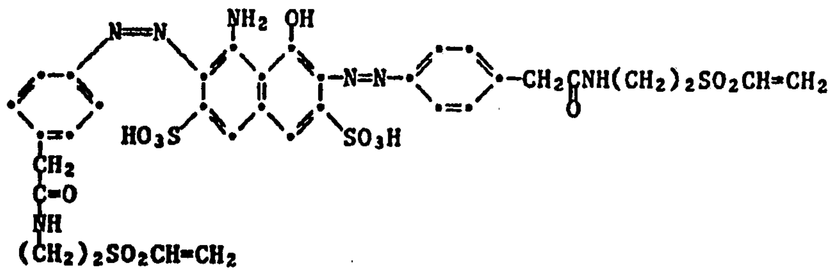 | marine-blau |
| 97 | 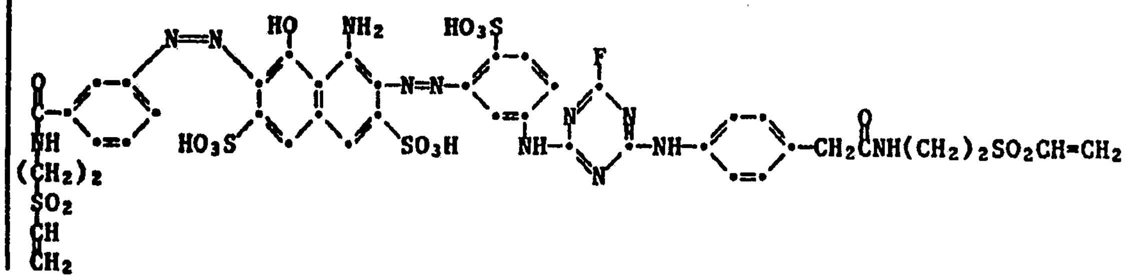 | marine-blau |

| Nr. | | Farbton |
|---|---|---|
| 98 | 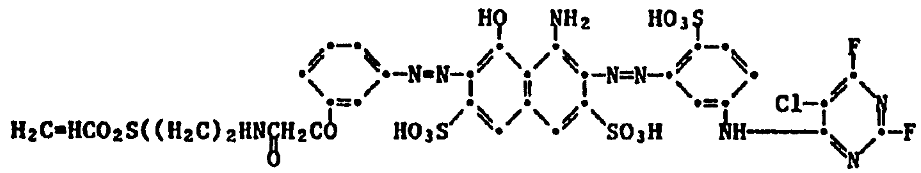 | marine-blau |
| 99 | 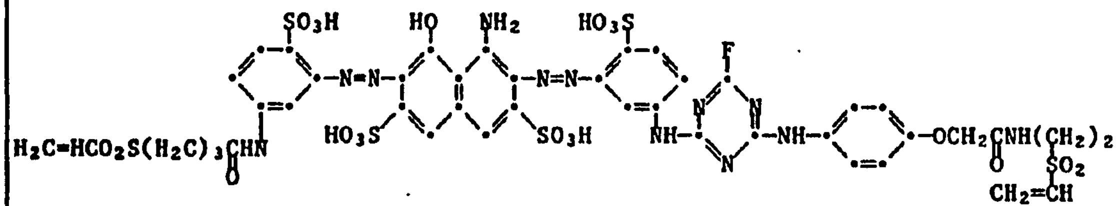 | marine-blau |
| 100 | 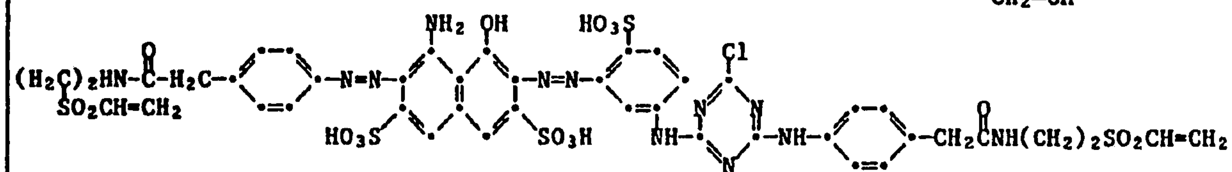 | marine-blau |
| 101 | 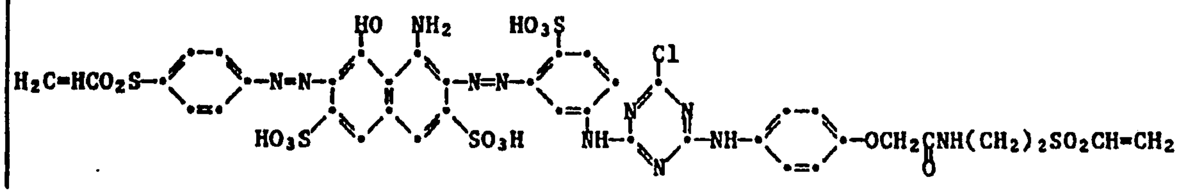 | marine-blau |

| Nr. | | Farbton |
|---|---|---|
| 102 | 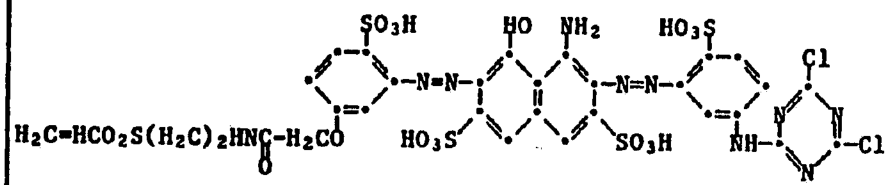 | marine-blau |
| 103 | 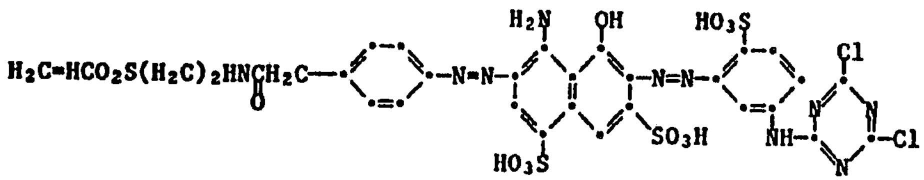 | marine-blau |
| 104 | 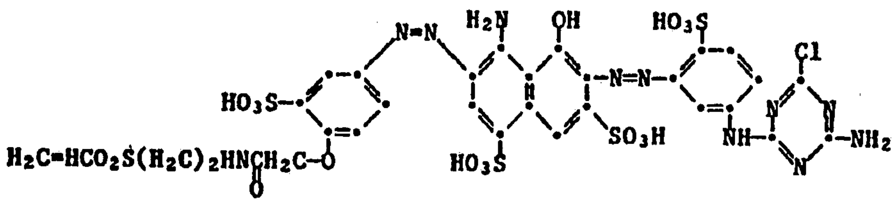 | marine-blau |

| Nr. | | Farbton |
|---|---|---|
| 105 | 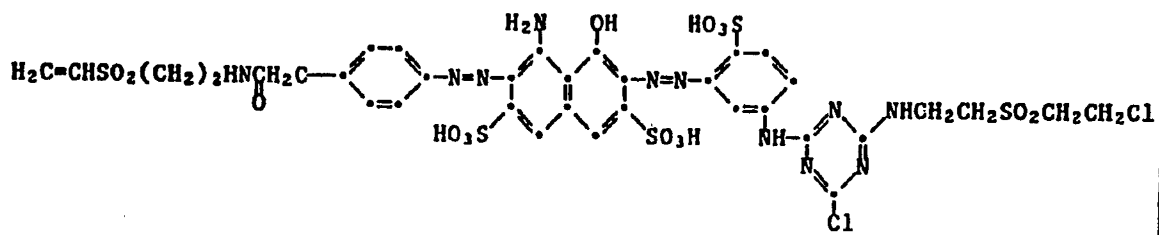 | marine-blau |
| 106 | 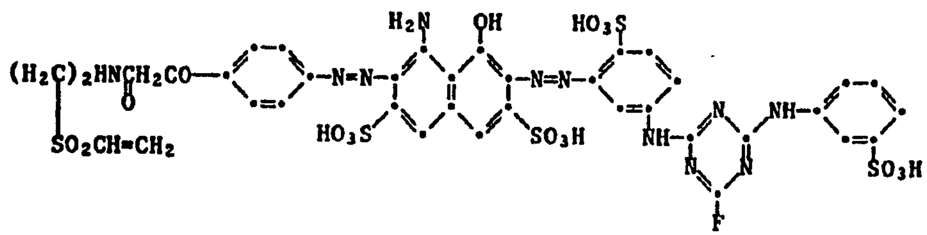 | marine-blau |
| 107 | 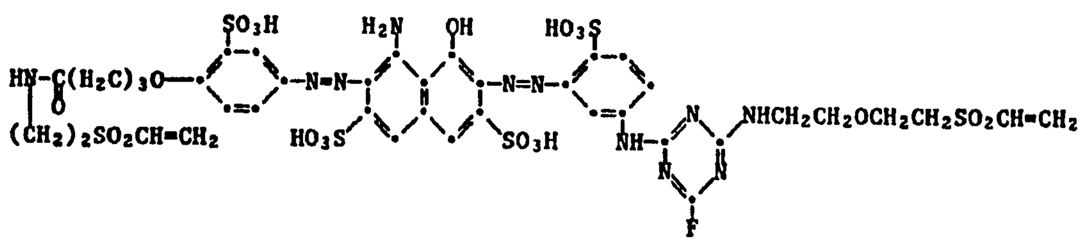 | marine-blau |

Färbevorschrift I

2 Teile des gemäss Beispiel 1 erhaltenen Farbstoffes werden in 400 Teilen Wasser gelöst ; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten weden 100 Teile einer Lösung, die pro Liter 16 g Natriumhydroxyd und 20 g kalzinierte Soda enthält, zugegeben. Die Temepratur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst ; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalzinierte Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst ; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalzinierte Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird eine Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel

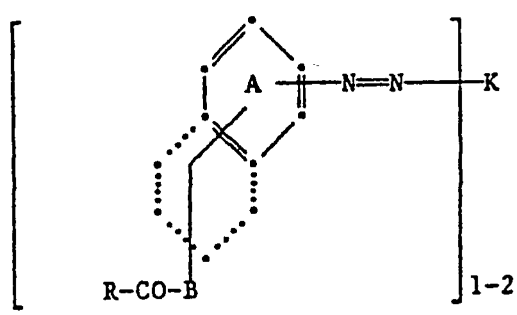

(1) ,

worin B ein Rest $-(CH_2)_n-$ oder $-O-(CH_2)_n-$, wobei, falls B ein Rest $-O-(CH_2)_n-$ ist, B durch das Sauerstoffatom an das Ringsystem A gebunden ist, n = 1 bis 6, R ein Rest der Formel

$$Z - SO_2 - CH_2 - (alk) - \underset{V}{\overset{Y}{N}} - \quad (1a)$$

$$Z - SO_2 - (CH_2)_m - O - (CH_2)_p - \underset{R_1}{N} - \quad (1b)$$

$$Z - SO_2 - (alk') - NH - (alk') - \underset{H}{N} - \quad (1c)$$

oder $Z - SO_2 - (CH_2)q -$ 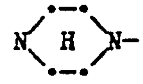 (1d);

Z β-Sulfatoäthyl, β-Thiosulfatoäthyl, β-Phosphatoäthyl, β-Acyloxyäthyl, β-Halogenäthyl oder Vinyl ; alk ein

Alkylenrest mit 1 bis 6 C-Atomen oder dessen verzweigte Isomere ; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat ; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann ; oder ein Rest

$$Z - SO_2 - CH_2 - \overset{\overset{Y}{|}}{(alk)} -$$

worin Z, alk und Y die angegebenen Bedeutungen haben ; $R_1$ Wasserstoff oder $C_{1-6}$-Alkyl ; alk' unabhängig voneinander Polymethylenreste mit 2 bis 6 C-Atomen oder deren verzweigte Isomere ; m = 1 bis 6, p = 1 bis 6 und q = 1 bis 6 ; und K der Rest einer Kupplungskomponente der Benzol- oder Naphthalinreihe oder der heterocyclischen Reihe ist ; und der Benzol- bzw. Naphthalinrest A weitersubstituiert sein kann durch Alkylgruppen mit 1 bis 4 Kohlenstoffatomen, Alkoxygruppen mit 1 bis 4 kohlenstoffatomen, Acylaminogruppen mit 1 bis 8 Kohlenstoffatomen, Amino, Alkylamino mit 1 bis 4 Kohlenstoffatomen, Phenylamino, N,N-Di-β-hydroxyäthylamino, N,N-Di-β-sulfatoäthylamino, Sulfobenzylamino, N,N-Di-sulfobenzylamino, Alkoxycarbonyl mit 1 bis 4 Kohlenstoffatomen im Alkoxyrest, Alkylsulfonyl mit 1 bis 4 Kohlenstoffatomen, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl und Sulfo.

2. Reaktivfarbstoffe gemäss Anspruch 1, der Formel

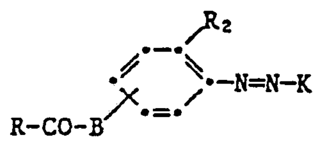
(2),

worin $R_2$ Wasserstoff, $C_{1-4}$-Alkyl, $C_{1-4}$-Alkoxy, Halogen, Hydroxy, Carboxy oder Sulfo ist ; und B, R und K die in Anspruch 1 angegebenen Bedeutungen haben.

3. Reaktivfarbstoffe gemäss Anspruch 2, der Formel

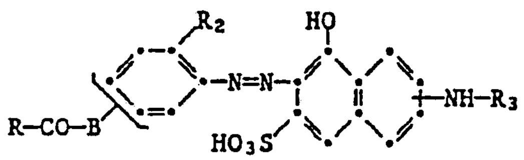
(3),

worin $R_3$ $C_{1-4}$-Alkanoyl oder Benzoyl ist, und B, R und $R_2$ die in Anspruch 2 angegebenen Bedeutungen haben.

4. Reaktivfarbstoffe gemäss Anspruch 3, worin $R_3$ Acetyl ist.

5. Reaktivfarbstoffe gemäss Anspruch 2, der Formel

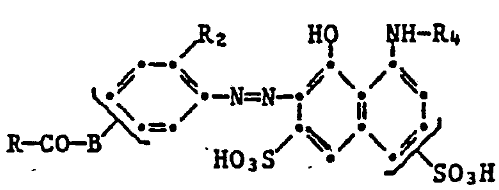
(4),

worin $R_4$ $C_{1-4}$-Alkanoyl oder Benzoyl ist, und B, R und $R_2$ die in Anspruch 2 angegebenen Bedeutungen haben.

6. Reaktivfarbstoffe gemäss Anspruch 5, worin $R_4$ Benzoyl ist.

7. Reaktivfarbstoffe gemäss Anspruch 2, der Formel

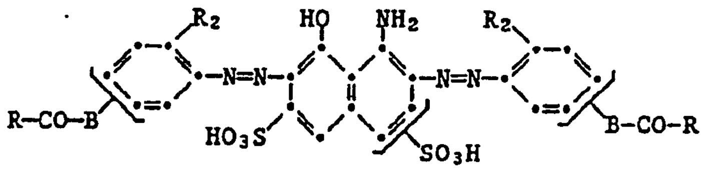

(5),

worin B, R und $R_2$ die in Anspruch 2 angegebenen Bedeutungen haben.

8. Reaktivfarbstoffe gemäss Anspruch 2, der Formel

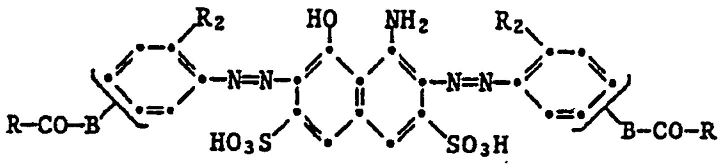

(6),

worin B, R und $R_2$ die in Anspruch 2 angegebenen Bedeutungen haben.

9. Reaktivfarbstoffe gemäss Anspruch 2, der Formel

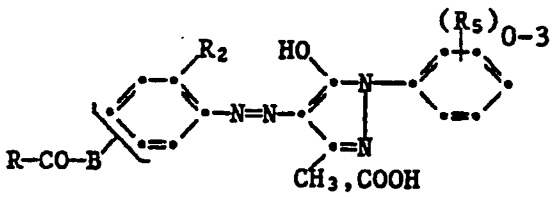

(7),

worin $R_5$ für 0 bis 3 Substituenten aus der Gruppe Chlor, Methyl, Methoxy, Carboxy oder Sulfo unabhängig voneinander, steht, und B, R und $R_2$ die in Anspruch 2 angegebenen Bedeutungen haben.

10. Reaktivfarbstoffe gemäss Anspruch 2, der Formel

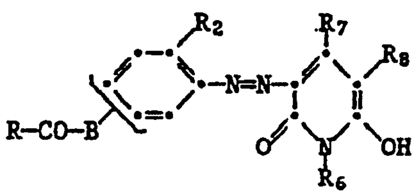

(8),

worin $R_6$ und $R_7$ unabhängig voneinander Wasserstoff, $C_{1-4}$-Alkyl oder Phenyl, und $R_8$ Wasserstoff, Cyano, Carbamoyl oder Sulfomethyl ist, und B, R und $R_2$ die in Anspruch 2 angegebenen Bedeutungen haben.

11. Schwermetallkomplexe von Reaktivfarbstoffen gemäss einem der Ansprüche 1 bis 10.

12. Reaktivfarbstoffe gemäss Anspruch 1, worin Z die β-Sulfatoäthyl-, β-Chloräthyl- oder Vinylgruppe ist.

13. Verfahren zur Herstellung von Reaktivfarbstoffen der Formel (1) gemäss Anspruch 1, dadurch gekennzeichnet, dass man Diazokomponenten der Formel

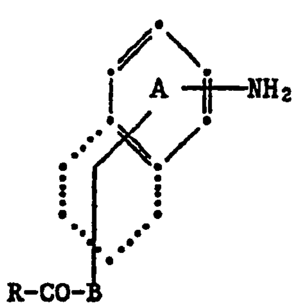

(9) ,

oder ihre Vorprodukte, und Kupplungskomponenten der Formel

$$H—R \quad (10)$$

durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

14. Verwendung der Reaktivfarbstoffe gemäss Anspruch 1, zum Färben oder Bedrucken von cellulosehaltigen Fasermaterialien.

15. Verwendung gemäss Anspruch 14, zum Färben oder Bedrucken von Baumwolle.

## Claims

1. A reactive dye of the formula

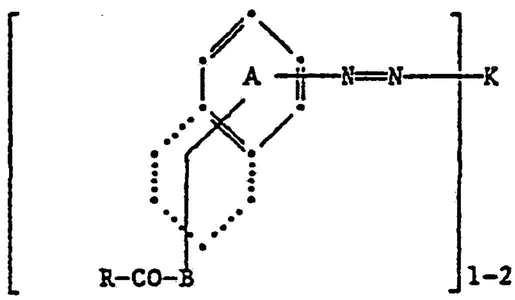

(1)

in which B is a radical $-(CH_2)_n-$ or $-(CH_2)_n O-$, where if B is a radical $-O-(CH_2)_n-$ B is linked to the ring system A via the oxygen atom, n is 1 to 6, R is a radical of the formula

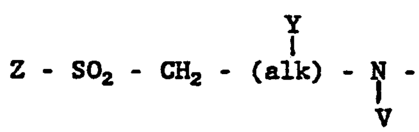

(1a)

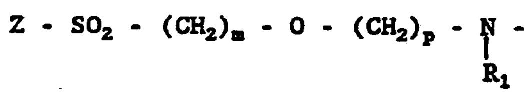

(1b)

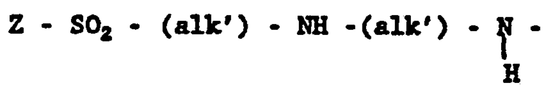

(1c)

or 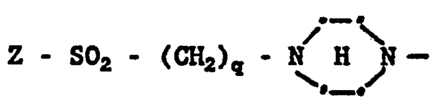

(1d);

Z is β-sulfatoethyl, β-thiosulfatoethyl, β-phosphatoethyl, β-acyloxyethyl, β-halogenoethyl or vinyl ; alk is an alkylene radical having 1 to 6 C atoms or branched isomers thereof ; Y is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical $-SO_2-Z$ in which Z is as defined above ; V is hydrogen or an alkyl radical which has 1 to 4 C atoms and can be substituted by carboxyl or sulfo groups or derivatives thereof, alkoxy groups having 1 or 2 C atoms, halogen or hydroxyl ; or V is a radical

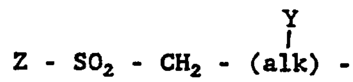

in which Z, alk and Y are as defined above ; $R_1$ is hydrogen or $C_1$-$C_6$-alkyl ; the alk's independently of one another are polymethylene radicals having 2 to 6 C atoms or branched isomers thereof ; m is 1 to 6, p is 1 to 6 and q is 1 to 6 ; and K is the radical of a coupling component of the benzene or naphthalene series or of the heterocyclic series ; and the benzene or naphthalene radical A can be substituted further by alkyl groups having 1 to 4 carbon atoms, alkoxy groups having 1 to 4 carbon atoms, acylamino groups having 1 to 8 carbon atoms, amino, alkylamino having 1 to 4 carbon atoms, phenylamino, N,N-di-β-hydroxyethylamino, N,N-di-β-sulfatoethylamino, sulfobenzylamino, N,N-disulfobenzylamino, alkoxycarbonyl having 1 to 4 carbon atoms, in the alkoxy radical, alkylsulfonyl having 1 to 4 carbon atoms, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-hydroxyethyl)sulfamoyl, N,N-di(β-hydroxyethyl)sulfamoyl, N-phenylsulfamoyl, ureido, hydroxyl, carboxyl, sulfomethyl and sulfo.

2. A reactive dye according to claim 1 of the formula

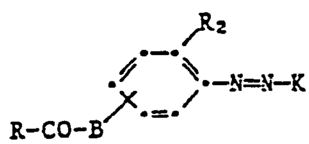

(2)

in which $R_2$ is hydrogen, $C_1$-$C_4$alkyl, $C_1$-$C_4$alkoxy, halogen, hydroxyl, carboxyl or sulfo ; and B, R and K are as defined in claim 1.

3. A reactive dye according to claim 2 of the formula

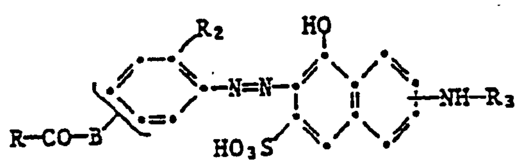

(3)

in which $R_3$ is $C_1$-$C_4$alkanoyl or benzoyl and B, R and $R_2$ are as defined in claim 2.

4. A reactive dye according to claim 3 in which $R_3$ is acetyl.

5. A reactive dye according to claim 2 of the formula

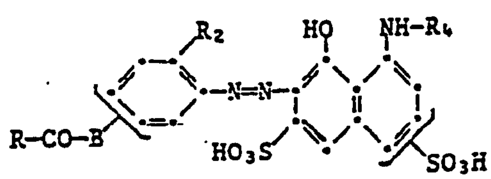

(4)

in which $R_4$ is $C_1$-$C_4$alkanoyl or benzoyl and B, R and $R_2$ are as defined in claim 2.

6. A reactive dye according to claim 5 in which $R_4$ is benzoyl.

7. A reactive dye according to claim 2 of the formula

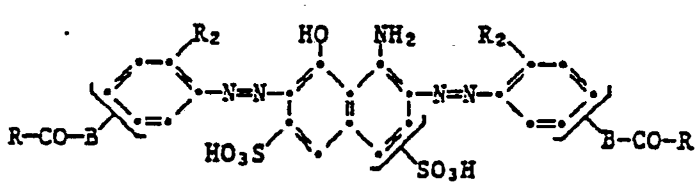

(5)

in which B, R and $R_2$ are as defined in claim 2.

8. A reactive dye according to claim 2 of the formula

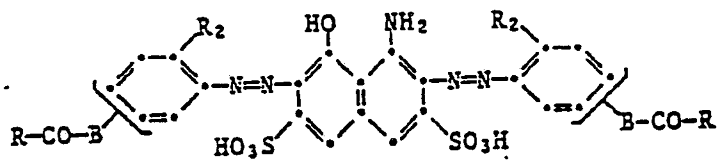

(6)

in which B, R and $R_2$ are as defined in claim 2.

9. A reactive dye according to claim 2 of the formula

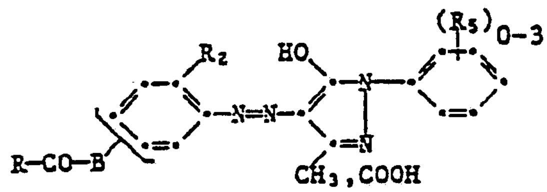

(7)

in which the $R_5$s independently of one another are 0 to 3 substituents belonging to the group comprising chlorine, methyl, methoxy, carboxyl or sulfo, and B, R and $R_2$ are as defined in claim 2.

10. A reactive dye according to claim 2 of the formula

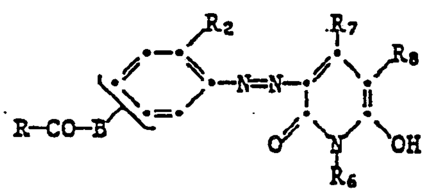

(8)

in which $R_6$ and $R_7$ independently of one another are hydrogen, $C_1$-$C_4$alkyl or phenyl and $R_8$ is hydrogen, cyano, carbamoyl or sulfomethyl, and B, R and $R_2$ are as defined in claim 2.

11. A heavy metal complex of a reactive dye according to any one of claims 1 to 10.

12. A reactive dye according to claim 1 in which Z is the β-sulfatoethyl,β-chloroethyl or vinyl group.

13. A process for the preparation of a reactive dye of the formula (1) according to claim 1, which comprises reacting a diazo component of the formula

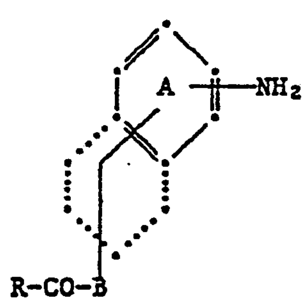

(9)

or a precursor thereof with a coupling component of the formula

H-K (10)

by diazotization and coupling to give a reactive dye of the formula (1), or converting the intermediates obtained into the desired final dyes and, if appropriate, carrying out a further conversion reaction.

14. The use of a reactive dye according to claim 1 for dyeing or printing cellulose-containing fibre materials.

15. The use according to claim 14 for dyeing or printing cotton.

**Revendications**

1. Colorants réactifs de formule

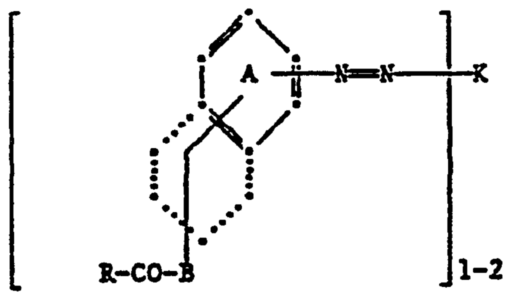

(1) ,

dans laquelle B est un reste $—(CH_2)_n—$ ou $—O-(CH_2)_n—$, B étant lié au système cyclique A par l'atome d'oxygène dans le cas où B est un reste $—O-(CH_2)_n—$, n = 1 à 6, R est un reste de formule

$$Z - SO_2 - CH_2 - (alk) - \underset{\underset{V}{|}}{\overset{\overset{Y}{|}}{N}} - \qquad (1a)$$

$$Z - SO_2 - (CH_2)_m - O - (CH_2)_p - \underset{\underset{R_1}{|}}{N} - \qquad (1b)$$

$$Z - SO_2 - (alk') - NH -(alk') - \underset{\underset{H}{|}}{N} - \qquad (1c)$$

ou

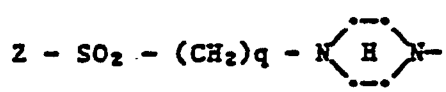

(1d);

Z est β-sulfatoéthyle, β-thiosulfatoéthyle, β-phosphatoéthyle, β-acyloxyethyle, β-halogénoéthyle ou vinyle ; alk est un reste alkylène comportant de 1 à 6 atomes de carbone ou ses isomères ramifiés ; Y représente un atome d'hydrogène, de chlore, de brome, de fluor, un groupe hydroxy, sulfato, acyloxy comportant de 1 à 4 atomes de carbone, cyano, carboxy, alcoxycarbonyle comportant de 1 à 5 atomes de carbone, carbamoyle, ou bien un reste $—SO_2-Z$ dans lequel Z a a définition indiquée ci-dessus ; V est un atome d'hydrogène ou un reste alkyle comportant de 1 à 4 atomes de carbone et pouvant être substitué par des groupes carboxy ou sulfo ou leurs dérivés, des groupes alcoxy comportant de 1 à 2 atomes de carbone, un atome d'halogène ou un groupe hydroxy ; ou bien un reste

$$Z - SO_2 - CH_2 - \overset{\overset{Y}{|}}{(alk)} -$$

dans lequel Z, alk et Y ont les définitions données ci-dessus ; $R_1$ représente un atome d'hydrogène ou un groupe alkyle en $C_{1-6}$ ; alk', indépendamment l'un de l'autre, représentent des restes polyméthylène en $C_{2-6}$ ou leurs isomères ramifiés ; m = 1 à 6, p = 1 à 6 et q = 1 à 6 ; et K est le reste d'un copulant de la série benzènique ou naphtalènique ou de la série hétérocyclique ; et le reste benzènique ou naphtalènique A peut être encore substitué par des groupes alkyle en $C_{1-4}$, des groupes alcoxy en $C_{1-4}$, des groupes acylamino en $C_{1-8}$, amino, alkylamino en $C_{1-4}$, phénylamino, N,N-di-β-hydroxyéthylamino, N,N-di-β-sulfatoéthylamino, sulfobenzylamino, N,N-disulfobenzylamino, alcoxycarbamoyle à groupe alcoxy en $C_{1-4}$, alkylsulfonyle en $C_{1-4}$, trifluorométhyle,

nitro, cyano, halogène, carbamoyle, N-alkylcarbamoyle à reste alkyle en $C_{1-4}$, sulfamoyle, N-alkylsulfamoyle en $C_{1-4}$, N-(β-hydroxyéthyl)-sulfamoyle, N,N-di-(β-hydroxyéthyl)-sulfamoyle, N-phénylsulfamoyle, uréido, hydroxy, carboxy,sulfométhyle et sulfo.

2. Colorants réactifs melon la revendication 1, de formule

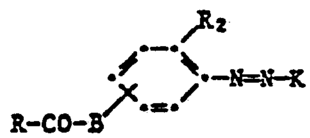

(2),

dans laquelle $R_2$ représente un atome d'hydrogène, un groupe alkyle en $C_{1-4}$, alcoxy en $C_{1-4}$, un atome d'halogène, un groupe hydroxy, carboxy ou sulfo ; et B, R et K ont les définitions données dans la revendication 1.

3. Colorants réactifs selon la revendication 2, de formule

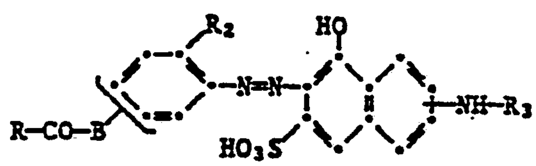

(3),

dans laquelle $R_3$ représente un groupe alcanoyle en $C_{1-4}$ ou benzoyle, et B, R et $R_2$ ont les définitions données dans la revendication 2.

4. Colorants réactifs selon la revendication 3, dans lesquels $R_3$ est un groupe acétyle.

5. Colorants réactifs selon la revendication 2, de formule

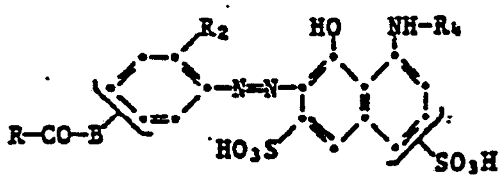

(4),

dans laquelle $R_4$ représente un groupe alcanoyle en $C_{1-4}$ ou benzoyle, et B, R et $R_2$ ont les définitions données dans la revendication 2.

6. Colorants réactifs selon la revendication 5, dans lesquels $R_4$ est un groupe benzoyle.

7. Colorants réactifs selon la revendication 2, de formule

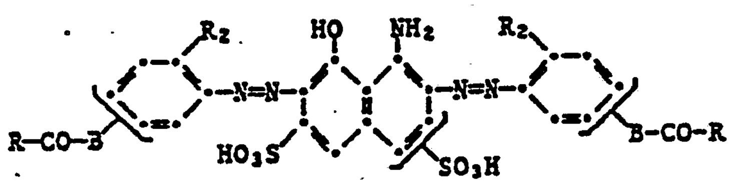

(5)

dans laquelle B, R et $R_2$ ont les définitions données dans la revendication 2.

8. Colorants réactifs selon la revendication 2, de formule

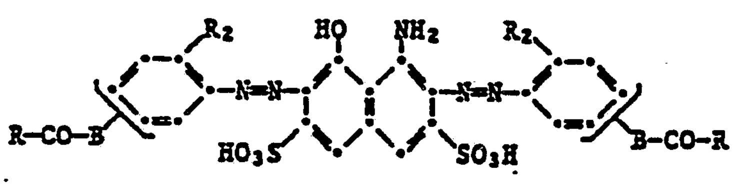

(6),

dans laquelle B, R et $R_2$ ont les définitions données dans la revendication 2.

9. Colorants réactifs selon la revendication 2, de formule

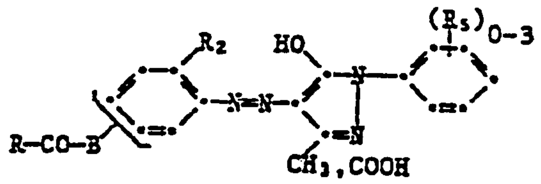

(7),

dans laquelle $R_5$ représente de 0 à 3 substituants choisis parmi chlore, méthyle, méthoxy, carboxy ou sulfo, indépendamment l'un de l'autre, et B, R et $R_2$ ont les définitions données dans la revendication 2.

10. Colorants réactifs selon la revendication 2, de formule

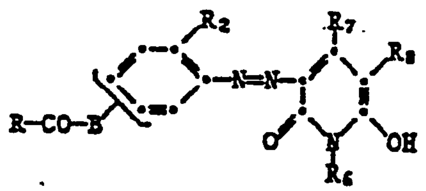

(8),

dans laquelle $R_6$ et $R_7$, indépendamment l'un de l'autre, représentent un atome d'hydrogène ou un groupe alkyle en $C_{1-4}$ ou phényle, et $R_8$ représente un atome d'hydrogène ou un groupe cyano, carbamoyle ou sulfométhyle, et B, R et $R_2$ ont les définitions données dans la revendication 2.

11. Complexes de métaux lourds des colorants réactifs selon une quelconque des revendications 1 à 10.

12. Colorants réactifs selon la revendication 1, dans lesquels Z est le groupe β-sulfatoéthyle, β-chloroéthyle ou Vinyle.

13. Procédé de préparation de colorants réactifs de formule 1 selon la revendication 1, caractérisé en ce que l'on fait réagir, par diazotation et copulation, des composants diazo de formule

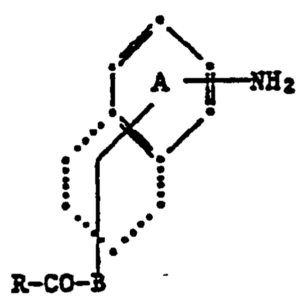

(9) ,

ou leurs précurseurs, et des copulants de formule

H-K (10)

pour obtenir des colorants réactifs de formule (1), ou bien que l'on transforme les produits intermédiaires obtenus en les colorants finis désirés, et qu'on les soumet éventuellement à une réaction de transformation ultérieure.

14. Emploi des colorants réactifs selon la revendication 1, pour la teinture ou l'impression de matériaux fibreux contenant de la cellulose.

15. Emploi selon la revendication 14, pour la teinture ou l'impression du coton.